# EUROPEAN PATENT APPLICATION

(11) **EP 1 097 863 A2**
(43) Date of publication of application: **09.05.2001**
(21) Application number: 00123485.5
(22) Date of filing: 07.11.2000
(51) Int. Cl.: B62M 23/02, B62J 7/04

(54) **Electric power assist bicycle**

(30) Priority: 08.11.1999 JP 31659499; 27.12.1999 JP 36870299; 12.06.2000 JP 2000174633
(71) Applicant: Mitsubishi Heavy Industries, Ltd., Tokyo (JP)
(72) Inventor: Sonobe, Hiroyuki, Mitsubishi Heavy Industries, Nakamura-ku, Nagoya, Aichi-ken (JP); Takahashi, Hisayoshi, Mitsubishi Heavy Industries, Nakamura-ku, Nagoya, Aichi-ken (JP)
(74) Representative: HOFFMANN - EITLE

(57) **Abstract**

The present invention provides an electric power assist bicycle having a bicycle body with a foot-driven chain sprocket (7) rotated by foot operation and an electric power assist drive unit (10) attached to the bicycle body, in which the electric power assist drive unit (10) includes an electric motor (31), a foot depression slave chain sprocket (9) which takes in the power of the foot-driven chain sprocket (7) as foot depression power via a first chain (8), and a master chain sprocket (11) rotated by power obtained by composition of the taken-in foot depression power and assist power caused by the electric motor (31), by which the power of the master chain sprocket (11) is transmitted to a rear wheel (17) of the bicycle body via a second chain (13).

## Description

### BACKGROUND OF THE INVENTION AND RELATED ART STATEMENT

### 1. Field of the Invention

The present invention relates to an electric power assist bicycle and, more particularly, to an attaching construction for a drive unit and a configuration thereof. Also, the present invention relates to an electric power assist bicycle and, more particularly, to a configuration of a battery unit, which is mounted on an electric power assist bicycle, for storing chargeable batteries and a mounting construction therefor.

### 2. Description of Related Art

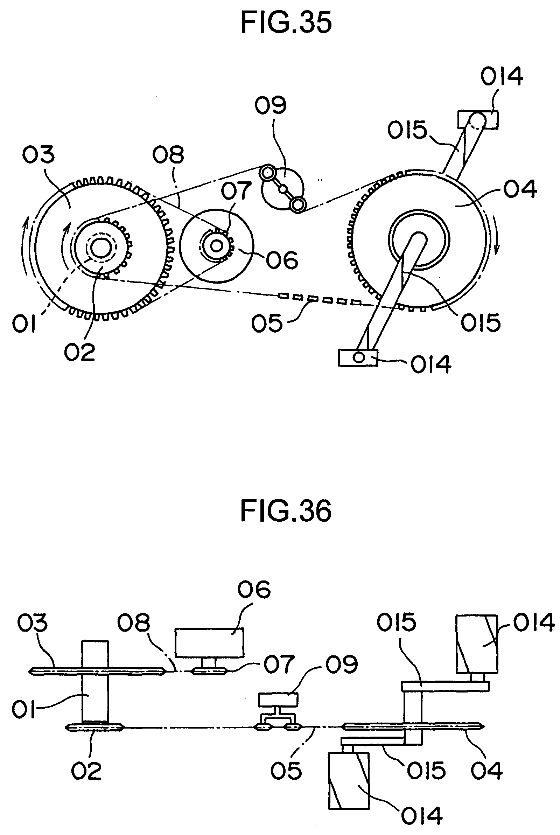

FIGS. 35 and 36 are a side view and a plan view, respectively, of an auxiliary power unit for a bicycle described in Japanese Patent Provisional Publication No. 56-149277 (No. 149277/1981).

In this auxiliary power unit, a first freewheel 02 and a second freewheel 03 are installed on a rear wheel hub 01, and a first chain 05 is set around the first freewheel 02 and a drive-side chain sprocket 04, while a second chain 08 is set around the second freewheel 03 and a chain sprocket 07 attached to the output shaft of a drive motor 06.

At a halfway point of the first chain 05 is provided a torque detector 09. This torque detector 09, having a shaft that is turned by the action of tension applied to the chain 05, converts the turning angle of the shaft into a quantity of electricity (for example, the magnitude of electric resistance or electric capacity).

When pedals 014 are depressed by a rider, a depressing force acts on the first chain 05 via a crank 015 and the drive-side chain sprocket 04. Accordingly, a tension corresponding to the depressing force is generated in the first chain 05, and this tension is detected by the torque detector 09.

At the time of start, acceleration, or hill climbing, the pedals 014 are depressed strongly, so that the shaft of the torque detector 09 is turned through a preset angle or an angle larger than that. In this case, electric power is supplied to the motor 06, and the power of the motor 06 is transmitted to the second wheel 03 through the chain sprocket 07 attached to the output shaft of the motor 06 and the second chain 08. As a result, a rear wheel is driven by a resultant torque of a driving torque caused by human force and a driving torque produced by the motor 06.

The above-described auxiliary power unit has a drawback in that the second freewheel 03 provided on the rear wheel hub 01 and the second chain 08 set around the freewheel 03 are located so as to project in the width direction of the bicycle.

Also, the auxiliary power unit has a drawback in that an extension (output shaft) of the hub 01 to which the second freewheel 03 is attached is liable to deflect because of its cantilever support, and therefore it is difficult to maintain the transverse balance of the hub 01.

Further, since the power unit is located close to the rear wheel, the weight distribution of the bicycle shifts to the rear wheel side. Therefore, the weight on the front wheel side becomes too light, so that the operation of the bicycle is liable to be unstable.

Thereupon, various proposals have been made to achieve a smaller size in the axial direction of the bicycle and a better weight distribution between the front and rear wheels.

For example, an auxiliary power unit in which an electric power unit is arranged coaxially with a crankshaft and an electric motor is arranged on the vehicle front side of the crankshaft has been proposed in Japanese Patent Provisional Publication No. 7-40878 (No. 40878/1995), for example.

According to this auxiliary power unit, the weight distribution balance of vehicle body as a bicycle is improved, and at the same time, a depressing force torque detecting means, a one-way clutch, and the like are housed in the power unit, thereby achieving compactness.

However, for this auxiliary power unit, although the power unit is compact, it is difficult to manufacture a frame of the bicycle itself because a bracket lug portion, which is an attachment portion of a pedal crank of an ordinary bicycle, is removed and the power unit is installed in this portion. Also, measures for maintaining a necessary strength significantly increases the weight and cost.

Japanese Patent Provisional Publication No. 9-11970 (No. 11970/1997) has disclosed an auxiliary power unit that can be installed easily without greatly changing the construction of the ordinary bicycle.

For this auxiliary power unit, an electric motor and a mechanism for reducing the rotational speed of the motor are housed in a casing, and the casing is supported in the front-side position of a bicycle so as to be rotatable with respect to the central axis of a bracket lug of the bicycle. Ahollow output shaft of the speed reducing mechanism is inserted in the bracket lug of the bicycle, a pedal crankshaft is rotatably inserted in the hollow portion of the output shaft, and a driving sprocket around which a rear wheel driving chain is set is attached to the pedal crankshaft. The casing is fixed to a bicycle frame to prevent the casing itself from being rotated.

According to the auxiliary power unit of this configuration, the construction of the bicycle itself need not be worked on except for the case where parts around the pedal crankshaft are replaced.

Since an electric bicycle equipped with an auxiliary power unit is mainly driven by foot depression power, importance is attached to runningfeelingastheordinarybicyclecausedbyfootpedals. Therefore the auxiliary power unit is required to be lighter in weight and lower in cost.

The conventional electric bicycle equipped with the auxiliary power unit described in Japanese Patent Provisional Publication No. 7-40878 (No. 40878/1995) is heavy and expensive because the ordinary bicycle construction is greatly changed to install the auxiliary power unit.

On the other hand, in the conventional example disclosed in Japanese Patent Provisional Publication No. 9-11970 (No. 11970/1997), light weight and low cost are achieved by a configuration such that the ordinary bicycle construction is not changed to the utmost and the auxiliary power unit can be installed later.

In this conventional example, however, since the hollow shaft and the crankshaft are inserted in the bracket lug portion, if an attempt is made to use the inside diameter of the bracket lug as usual, the diameters of these shafts must be set small. Since the shafts are subjected to a high foot depression force, the diameter thereof set small may bring about a shortage of strength of the shafts. Also, since the hollow output shaft is inserted in the bracket lug of the bicycle, there is created inconvenience such that a bearing used for the pedal crankshaft of the ordinary bicycle cannot be used.

Also, generally, a chargeable battery, which is a power source for the motor of the electric power assist bicycle, has a heavy weight with respect to the total weight of the bicycle, so that it is desirable that the location where the battery is installed be closest possible to the center of gravity of the bicycle. Therefore, a battery case is often installed in a position around a pipe frame under a saddle or a position along an oblique frame supporting the front wheel. However, since a commercially available bicycle is constructed to a limit of function of driving the bicycle with human power, there is no sufficient space necessary for installing the battery around a main frame. In the electric power assist bicycle, therefore, a specially manufactured frame construction must be used including consideration of the installation of the electric motor.

On the other hand, if an attempt is made to mount the battery without greatly changing the construction of the commercially available bicycle, the battery is conveniently mounted in a position of a front rack above the front wheel or in a position of a rear rack above the rear wheel. However, since the battery has a weight of about 4 kg, if the battery is mounted on a front carrier for the front rack, a heavy handle bar undesirably exercises an adverse effect on the operability.

Also, since the rear rack is close to the center of gravity of the bicycle and also close to the saddle, there is little effect on the operability, and therefore some bicycles in which the battery is mounted in this position have been introduced publicly. For example, in the conventional example disclosed in Japanese Patent Provisional Publication No. 6-156362 (No. 156362/1994), two series of rectangular parallelepipedic battery cases are mounted at the upper part of the rear wheel so as to be divided into the right and left and be symmetrical transversely, andeachbatterycasecontainstensingle-typechargeable batteries arranged longitudinally in a row, so that the batteries have a substantially equal weight at the right and left of the bicycle.

In the above-described construction in which the conventional battery cases are disposed on the rear rack of the electric power assist bicycle, since the construction is such that the battery cases are mounted at the upper part of the rear rack, the rear rack is long and narrow longitudinally, and protective frames projecting transversely are additionally provided to protect the battery cases. Although luggage can be mounted on the top surface of the battery case, the mounting position becomes high, so that it is difficult to mount luggage, and also the construction of the battery case must be made robust.

### OBJECT AND SUMMARY OF THE INVENTION

The present invention has been made to solve the above-described problems with the prior art, and accordingly an object thereof is to provide a lightweight and inexpensive electric power assist bicycle having an electric power assist drive unit capable of being later installed easily to an ordinary bicycle. Also, the present invention has been made in view of the above situation, and accordingly another object thereof is to provide an electric power assist bicycle provided with a battery unit and a mounting structure therefor, the battery unit being configured so that even if a battery case (unit) is mounted-on a rear rack, the rack height is kept as low as the rack height of the ordinary bicycle to facilitate luggage loading and unloading operation to and from the rear rack and to improve the stability during running and the stability during stopping using a stand, the thickness of the battery unit is decreased to the utmost to improve the appearance, and even if the battery unit is arranged above a rear wheel, a function as an ordinary rear rack is not impaired.

The invention defined in claim 1 provides an electric power assist bicycle having a bicycle body with a foot-driven chain sprocket rotated by foot operation and an electric power assist drive unit attached to the bicycle body, in which the electric power assist drive unit includes an electric motor, a foot depression slave chain sprocket which takes in the power of the foot-driven chain sprocket as foot depression power via a first chain, and a master chain sprocket rotated by power obtained by composition of the taken-in foot depression power and assist power caused by the electric motor, by which the power of the master chain sprocket is transmitted to a rear wheel of the bicycle body via a second chain.

The invention defined in claim 2 is characterized in that in the invention defined in claim 1, the foot depression slave sprocket and the master sprocket are disposed concentrically.

The invention defined in claim 3 is characterized in that in the invention defined in claim 1 or 2, the electric power assist drive unit is located on the front side of a bracket lug of the bicycle body, the upper part of a casing of the electric power assist drive unit is attached to the bicycle body, and a support element which is in contact with the bracket lug to support the casing is provided on the casing.

The invention defined in claim 4 is characterized in that in the invention defined in claim 1 or 2, the upper part of casing of the electric power assist drive unit is pivotally fixed to an attachment member fixed to the bicycle body, support means for supporting the electric power assist drive unit is interposed between the attachment member and the electric power assist drive unit, and the support means has a take-up function for swayingly displacing the electric power assist drive unit with the pivotally fixing portion being the center to adjust the tension of the second chain.

The invention defined in claim 5 is characterized in that in the invention defined in claim 1 or 2, the electric power assist drive unit is located on the front side of bracket lug of the bicycle body, the upper part of casing of the electric power assist drive unit is pivotally fixed to the bicycle body, support means which is in contact with the bracket lug to support the casing is provided on the casing, the support means has a take-up function for swayingly displacing the electric power assist drive unit with the pivotally fixing portion being the center to adjust the tension of the second chain.

The invention defined in claim 6 is characterized in that in the invention defined in claim 5, the support means has a connecting portion for fixedly connecting the support means itself to the bicycle body.

The invention defined in claim 7 is characterized in that in the invention defined in any one of claims 1 to 6, the electric power assist drive unit comprises: a speed reducing mechanism, having a hollow speed reducing output shaft, for reducing the rotational speed of the electric motor; a planetary gear mechanism having a sun gear provided on a sun gear shaft which is concentric with the speed reducing output shaft and is rotatable, an internal gear connected directly to the foot depression slave chain sprocket, and a planetary gear which is supported by a planetary gear carrier to be rotated between the sun gear and the internal gear in a similar manner to a planet; a first one-way clutch which is interposed between the speed reducing output shaft and the shaft of the master chain sprocket and engages when the speed reducing shaft drives the master chain sprocket; and a second one-way clutch which is interposed between the planetary gear carrier and the master chain sprocket and engages when the planetary gear carrier drives themasterchainsprocket, and has a configuration in which these elements are housed in the casing.

The invention defined in claim 8 is characterized in that in the invention defined in claim 7, the casing incorporates foot torque detecting means for detecting a foot torque, and a controller for controlling supply power to the electric motor based on the foot torque.

The invention defined in claim 9 is characterized in that in the invention defined in claim 8, the foot torque detecting means comprises a torque detection arm which sways with the rotation of the sun gear shaft, a spring for applying a force proportional to the sway angle of the torque detection arm to the torque detection arm, and angle detecting means for detecting the sway angle of the torque detection arm as a foot torque.

The invention defined in claim 10 is characterized in that in the invention defined in claim 9, the torque detection arm has a fan-shaped rack along a circumference with the rotating shaft thereof being the center, and the angle detecting means has a pinion meshing with the rack and a potentiometer operating in connection with the pinion.

Also, the present invention defined in claims 11 to 19 for achieving the above-described object is characterized by the following points.
(1) In an electric power assist bicycle in which an electric power assist drive section is additionally provided in a foot drive section, a chargeable battery unit for supplying electric power to an electric motor comprises a battery case having two series of rectangular parallelepipedic battery storage boxes disposed symmetrically in the transverse direction with a gap being established, single-type chargeable dry batteries disposed horizontally and stored in the storage boxes of the battery case, a feeding connector and a charging connector attached to the front end of the battery case, and front and rear battery case receiving frames which are attached to the front and rear parts under a rear rack to support the battery case, and is configured so as to be mounted flat under the rear rack within an area occupied by the rear rack.
(2) In the electric power assist bicycle described in item (1), a slide rail for supporting the battery case so as to be movable in the longitudinal direction is provided between the front and rear battery case receiving frames of the battery unit under the rear rack so that the battery case is made a detachable type capable of being pulled out horizontally, and a lock key is provided on the rear rack to fix the position of the battery case and to prevent theft.
(3) In the electric power assist bicycle described in item (2), the slide rail for battery case is constructed of a steel plate integral with the rear rack to support the battery case, and the rear battery case receiving frame is omitted.
(4) In an electric power assist bicycle in which an electric power assist drive section is additionally provided in a foot drive section, a chargeable battery unit for supplying electric power to an electric motor comprises a pair of rectangular parallelepipedic battery cases, single-type chargeable dry batteries disposed horizontally and stored in the battery cases, a power distributing connector attached to the front end of the battery case, front and rear battery case receiving frames for supporting the battery cases at the right and left with a gap being established, and a feed connector and a charging connector attached to the front side of the front battery case receiving frame, and further a lock key is provided on a rear rack to fix the position of the battery case and to prevent theft.
(5) In the electric power assist bicycle described in item (4), in the battery unit, the battery cases are supported by a pair of steel-plate slide rails corresponding to the battery cases, which are provided in parallel integrally with the rear rack, and the rear battery case receiving frame is omitted.
(6) In an electric power assist bicycle in which an electric power assist drive section is additionally provided in a foot drive section, a chargeable battery unit for supplying electric power to an electric motor comprises a battery case having two series of rectangular parallelepipedic battery storage boxes disposed symmetrically in the transverse direction with a gap being established, single-type chargeable dry batteries disposed vertically and stored in two rows in the storage boxes of the battery case, a feeding connector and a charging connector attached to the front end of the battery case, a front battery case receiving frame attached to the front end on the lower side of a rear rack to support the battery case, a steel-plate slide rail integral with the rear rack, which is provided to support the battery case so as to be movable longitudinally under the rear rack in the rear of the front battery case receiving frame, and a lock key provided on the rear rack to fix the position of the battery case and to prevent theft, and is configured so that the upper part of a rear wheel is housed in a space between both the battery cases, and the battery case is of a detachable type capable of being pulled out horizontally.
(7) In an electric power assist bicyclein which an electric power assist drive section is additionally provided in a foot drive section, a chargeable battery unit for supplying electric power to an electric motor comprises a pair of rectangular parallelepipedic battery cases, single-type chargeable dry batteries disposed vertically and stored in the battery cases, a power distributing connector attached to the front end of the battery case, a battery case receiving frame having a connector engaging with the power distributing connector of the battery case, which is attached to the front end on the lower side of a rear rack to support the battery cases at the right and left with a gap being established, a pair of steel-plate slide rails provided integrally with the rear rack horizontally in parallel corresponding to the battery cases, and a feeding connector and a charging connector attached to the front end of the battery case receiving frame, and further a lock key is provided on the rear rack to fix the position of the battery case and to prevent theft.
(8) In an electric power assist bicycle in which an electric power assist drive section is additionally provided in a foot drive section, a chargeable battery unit for supplying electric power to an electric motor comprises a rear rack in which two cross steel bars are extended to the lower side to form a rectangular frame whose lower central portion is open and a U-shaped guide rail attached horizontally in the bicycle advance direction integrally to the inside end portion of the rectangular frame is provided, a battery case having two series of rectangular parallelepipedic battery storage boxes disposed symmetrically in the transverse direction with a gap being established, single-type chargeable dry batteries disposed horizontally and stored in the storage boxes of the battery case, a feeding connector and a charging connector attached to the front end of the battery case, and a lock key fixed to the rear rack to fix the position of the battery case and to prevent theft, and is configured so as to be mounted flat under the rear rack within an area occupied by the rear rack.
(9) In the electric power assist bicycle described in item (8), a protrusion having a semicircular groove engaging with the cross steel bar of the rear rack is provided on the top face of the battery case so that the battery case is positioned with respect to the rear rack by the protrusion.

Thus, according to the electric power assist bicycle in accordance with claim 1, the drive unit can be installed later on the bicycle body without modifying the bicycle body of ordinary specification and without replacing basic parts of the bicycle body. Also, many standard parts for the ordinary bicycle can be used as functional parts used for the power transmission of the drive unit, so that reduced cost, improved reliability, and lightweight can be achieved.

According to the electric power assist bicycle in accordance with claim 2, the drive unit can be configured so as to be compact.

According to the electric power assist bicycle in accordance with claim 3, since the attachment of the electric power assist drive unit is finished only by attaching the upper part of casing of the electric power assist drive unit to the bicycle body, the attaching operation is easy.

According to the electric power assist bicycle in accordance with claim 4 and 5, the tension of the second chain for transmitting the power of the master chain sprocket to the rear wheel of the bicycle body can be adjusted.

According to the electric power assist bicycle in accordance with claim 6, since the support means for supporting the electric power assist drive unit is fixedly connected to the bicycle body, the electric power assist drive unit can be attached to the bicycle body more stably.

According to the electric power assist bicycle in accordance with claim 7, since the speed reducing means for the electric power assist drive unit is configured by a combination of the double reduction gear mechanism and the planetary gear mechanism, a sufficient speed reducing ratio can be obtained, and the electric power assist drive unit can be made compact.

According to the electric power assist bicycle in accordance with claim 8, since the foot torque detecting means and the controller are housed in the casing of the electric power assist drive unit, nothing projects around the unit. Therefore, the electric power assist drive unit can be made more compact, and also the weight distribution in the case where the unit is attached to the bicycle body is improved.

According to the electric power assist bicycle in accordance with claim 9 and 10, since a foot torque can be detected by using the output of sun gear shaft of the planetary gear mechanism, the cost can be lowered.

Also, in the electric power assist bicycle of the present invention according to the aforementioned claims 11, 12, 14 and 15, since the battery unit mounted on the rear rack is mounted so as to be divided into halves to the right and left while avoiding the rear wheel under the rear rack, the rack height can be kept as low as the rack height of the ordinary bicycle, which results in easy luggage loading and unloading operation to and from the rear rack, improved stability during running, and improved stability during stopping using a stand. Moreover, since the batteries are arranged horizontally, the battery case can be made thin, and therefore the appearance is improved. Also, since the outside dimensions of the battery unit are made smaller than the outside dimensions of the rear rack, the battery unit is protected by the rear rack.

Also, in the electric power assist bicycle of the present invention, since the battery case is attached to the lower side of the rear rack, the load of luggage does not act on the battery unit, so that the practicality in carrying luggage is high.

Further, although the battery weight is about 4 kg, the battery unit can be attached and detached easily and safely when a handle is provided in addition to the attachment/detachment guide.

Also, for the battery unit described in claims 13, 16 and 17 which is supported only by the long steel-plate slide rail welded integrally to the steel bars constituting the rear rack, the above-described effects can be achieved, and also the construction is simple, and the number of parts is small, so that a low cost can be achieved.

Also, for the battery unit described in claims 18 and 19 which is supported by a U-shaped guide rail fixedly welded to steel bars which are welded integrally to the steel bars constituting the rear rack and are provided so as to wrap the battery case, the above-described effects can be achieved, and also the strength for supporting the battery case is high. In addition, the construction is simple, and the number of parts is small, so that a low cost can be achieved.

### BRIEF DESCRIPTION OF THE DRAWINGS

FIG. 1 is a side view of an electric power assist bicycle in accordance with a first embodiment of the present invention;
FIG. 2 is a side view showing a state in which an electric power assist drive unit shown in FIG. 1 is installed;
FIG. 3 is a view taken in the direction of the arrow B of FIG. 2;
FIG. 4 is a sectional view taken along the line A-A of FIG. 2;
FIG. 5 is a sectional view in which a power transmission mechanism portion of the drive unit shown in FIG. 2 is developed;
FIG. 6 is a sectional view taken along the line C-C of FIG. 4;
FIG. 7 is a block diagram showing a power transmission system and a control system of an electric power assist bicycle using the drive unit shown in FIG. 2;
FIG. 8 is a side view showing a state in which an electric power assist drive unit is installed on an electric power assist bicycle in accordance with a second embodiment of the present invention;
FIG. 9 is a view taken in the direction of the arrow D of FIG. 8;
FIG. 10 is a side view showing a state in which an electric power assist drive unit is installed on an electric power assist bicycle in accordance with a third embodiment of the present invention;
FIG. 11 is a back view of the drive unit shown in FIG. 10;
FIG. 12 is a sectional view taken along the line E-E of FIG. 10;
FIG. 13 is a sectional view taken along the line F-F of FIG. 12;
FIG. 14 is a side view of an electric power assist bicycle to which a battery unit is attached in accordance with embodiments of another mode of the present invention;
FIG. 15 is a plan view showing a state in which a battery unit in accordance with a first embodiment of another mode of the present invention is attached to a rear rack;
FIG. 16 is a side view of the rear rack and the battery unit shown in FIG. 15;
FIG. 17 is a sectional view taken along the line A-A of FIG. 15;
FIG. 18 is a perspective view of the rear rack and the battery unit shown in FIG. 15;
FIG. 19 is a plan view showing a state in which a battery unit in accordance with a second embodiment of another mode of the present invention is attached to a rear rack;
FIG. 20 is a side view of the rear rack and the battery unit shown in FIG. 19;
FIG. 21 is a sectional view taken in the direction of the arrow B and taken along the line C-C of FIG. 19;
FIG. 22 is a plan view showing a state in which a battery unit in accordance with a third embodiment of another mode of the present invention is attached to a rear rack;
FIG. 23 is a side view of the rear rack and the battery unit shown in FIG. 22;
FIG. 24 is a sectional view taken in the direction of the arrow D and taken along the line E-E of FIG. 22;
FIG. 25 is a plan view showing a state in which a battery unit in accordance with a fourth embodiment of another mode of the present invention is attached to a rear rack;
FIG. 26 is a side view of the rear rack and the battery unit shown in FIG. 25;
FIG. 27 is a sectional view taken in the direction of the arrow F of FIG. 26;
FIG. 28 is a plan view showing a state in which a battery unit in accordance with a fifth embodiment of another mode of the present invention is attached to a rear rack;
FIG. 29 is a side view of the rear rack and the battery unit shown in FIG. 28;
FIG. 30 is a sectional view taken in the direction of the arrow G of FIG. 29;
FIG. 31 is a plan view showing a state in which a battery unit in accordance with a sixth embodiment of another mode of the present invention is attached to a rear rack;
FIG. 32 is a side view of the rear rack and the battery unit shown in FIG. 31;
FIG. 33 is a sectional view taken in the direction of the arrow H and taken along the line J-J of FIG. 31;
FIG. 34 is a perspective view showing the construction of the rear rack shown in FIG. 31;
FIG. 35 is a side view showing the outline of a conventional auxiliary power unit; and
FIG. 36 is a plan view of the auxiliary power unit shown in FIG. 35.

### DETAILED DESCRIPTION OF PREFERRED EMBODIMENTS

### (First embodiment)

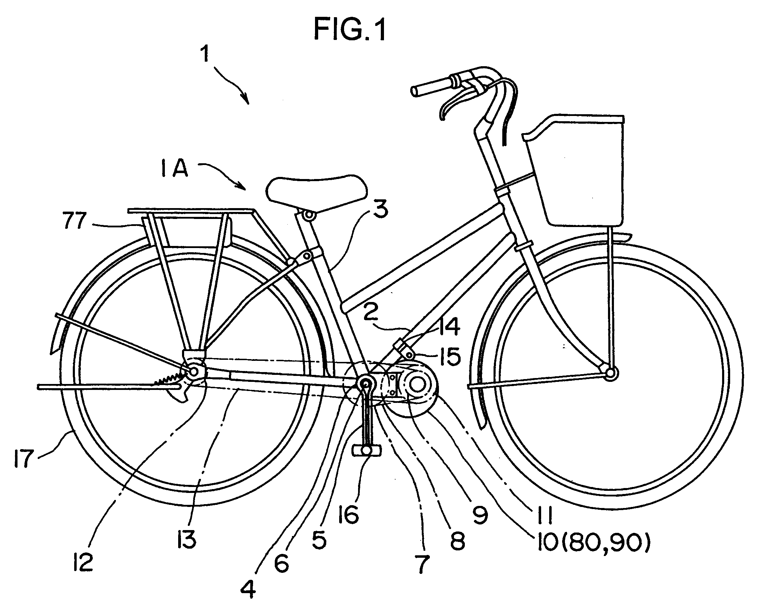

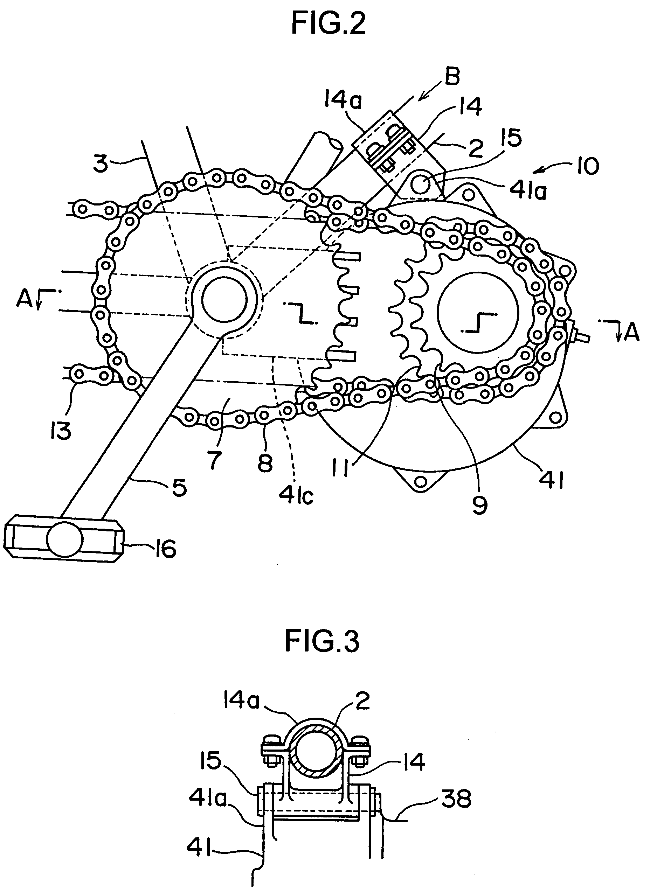

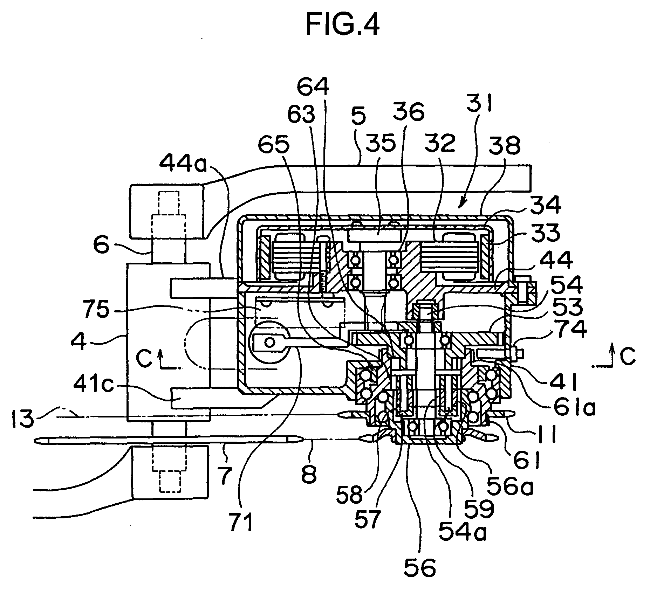

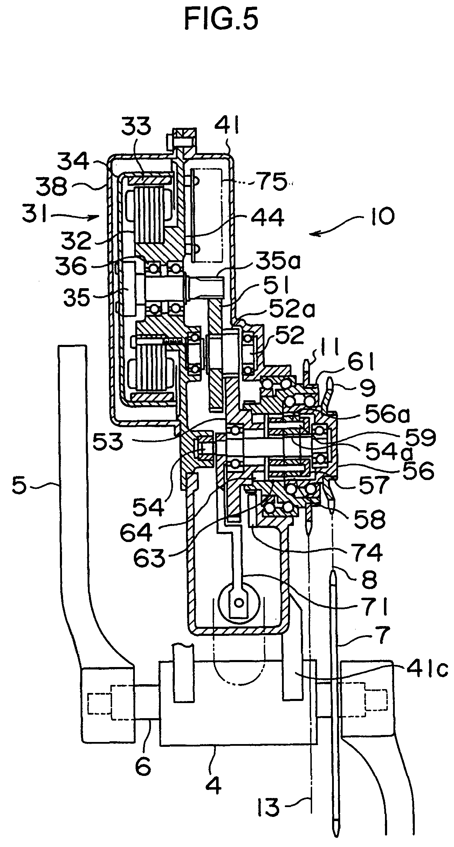

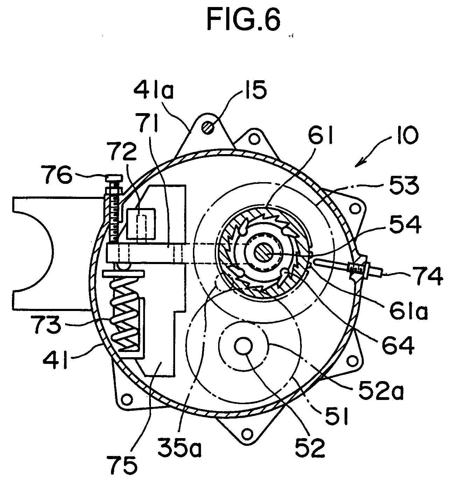

FIG. 1 is a general side view of an electric power assist bicycle in accordance with a first embodiment of the present invention, FIG. 2 is a side view showing a state in which an electric power assist drive unit is installed, FIG. 3 is a view taken in the direction of the arrow B of FIG. 2, FIG. 4 is a sectional view taken along the line A-A of FIG. 2, FIG. 5 is a sectional view in which a power transmission mechanism portion of the electric power assist drive unit is developed; and FIG. 6 is a sectional view taken along the line C-C of FIG. 4.

In an electric power assist drive bicycle 1 shown in FIG. 1, an electric power assist drive unit (hereinafter referred simply to as a drive unit) 10 is located in front of a bracket lug 4 of a bicycle body 1A, and is installed to the bicycle body 1A in the state shown in FIG. 2.

Specifically, an attachment member 14 is fixed to an oblique frame 2 of the bicycle body 1A via a support plate 14a. The drive unit 10, which is provided with a protrusion 41a at the upper part of a speed reducer casing 41, is -installed to the bicycle body 1A-by means of a support pin 15 inserted in a hole formed in the protrusion 41a and a hole formed in the attachment member 14.

On the other hand, for the drive unit 10, as shown in FIG. 4, fork-shaped support elements 41c and 44a having a semicircular concave tip end portion are projectingly provided on the speed reducer casing 41 and an inner wall 44, described later, respectively. By engaging the tip end portions of the support elements 41c and 44a with the outer peripheral surface of the bracket lug 4, tension on a chain 8 for transmitting a foot depression force and a chain 13 for driving a rear wheel 17 is taken.

A pedal crank 5 is installed at each end of a crankshaft 6 penetrating the bracket lug 4. To one end portion of the crankshaft 6 is fixed a foot-driven chain sprocket 7, and the chain 8 is set around the chain sprocket 7 and a chain sprocket 9 for taking a foot driving force in the drive unit 10.

On an output shaft of the drive unit 10 is installed a master chain sprocket 11, and on a shaft of the rear wheel 17 of the bicycle body 1A is installed a slave chain sprocket 12 (see FIG. 1) via a one-way clutch.

The chain 13 is set around the chain sprockets 11 and 12. Thereby, power can be transmitted from the master chain sprocket 11 to the slave chain sprocket 12. As shown in FIG. 1, abattery 77 for supplying electric power to an electric motor 31 is disposed at the rear upper part of the bicycle body 1A.

The chain sprocket 9 for taking the foot driving force in the drive unit 10 and the master chain sprocket 11 are arranged concentrically and adjacently. Therefore, the drive unit 10 can have a small-sized and compact construction while preventing interference between the sprockets 9 and 11.

The construction of the drive unit 10 will be explained with reference to FIGS. 4 to 6.

The motor 31 is disposed in a space defined by a motor casing 38 and the inner wall 44. One end of the speed reducer casing 41 is integrally connected to the motor casing 38 with the inner wall 44 being held therebetween, by which a speed reducing mechanism casing is formed.

The speed reducer casing 41 contains a double reduction gear mechanism, a later-described planetary gear mechanism, one-way clutches 63 and 64, and a later-describedfoottorquedetectionmechanism having a torque detection arm 71, a potentiometer 72, and a compression spring 73.

The motor 31 includes a stator 32 on which a coil is wound and a rotor 34 to which a plurality of magnets 33 are attached at predetermined intervals along the inner peripheral surface opposed to the outer peripheral surface of the stator 32.

This motor 31 is what is called a DC brushless motor, in which the rotor 34 is rotated by a rotating magnetic field generated when a coil current is switched on by a switching element such as a power transistor. The timing of sending a current to the coil is controlled by a Hall element or the like.

A first-stage gear 51 (see FIG. 5) is fixed to a rotating shaft 52 rotatably supported on the inner wall 44 and the casing 41 via a bearing, and meshes with a pinion 35a formed at the tip end of a rotating shaft 35 of the motor 31.

On a rotating shaft 52 of the first-stage gear 51 is formed a pinion 52a meshing with a second-stage gear 53. The second-stage gear 53 is rotatably supported on a sun gear shaft 54, and engages with an output shaft 61 via a one-way clutch 64 to transmit a forward driving force of the motor 31 to the output shaft 61.

The pinion 35a, the first-stage gear 51, the pinion 52a, and the second-stage gear 53 constitute the double reduction gear mechanism. Ahollow shaft portion of the second-stage gear 53 located concentrically around the sun gear shaft 54 constitutes a speed reducing output shaft of the double reduction gear mechanism, and this speed reducing output shaft engages with the output shaft 61 via the one-way clutch 64.

The planetary gear mechanism is composed of the sun gear shaft 54 disposed concentrically with the hollow output shaft 61, a sun gear 54a provided on the sun gear shaft 54, an internal gear 56a connected directly to the chain sprocket 9, a planetary gear carrier 57, and a planetary gear 58 rotating between the sun gear 54a and the internal gear 56a in a similar manner to a planet.

The planetary gear 58 is supported on the planetary gear carrier 57 via a pin 59.

The sun gear 54a, which is connected directly to the torque detection arm 71, rotates as torque detecting means. The sun gear 54a is regarded as stopping its rotation as an element of the power transmitting planetary gear mechanism. Therefore, the planetary gear mechanism constitutes a speed reducing mechanism in which the internal gear 56a connected directly to the slave sprocket receiving a foot depression force is taken as the drive side and the speed-reduced planetary gear carrier 57 is taken as the output side.

Between the planetary gear carrier 57 and the master chain sprocket 11 is interposed the one-way clutch 63, which engages only when the bicycle 1 goes forward.

To the sun gear shaft 54 is transmitted a torque proportional to a foot torque. Therefore, the compression spring 73 (see FIG. 6) interposed between the torque detection arm 71 fixed to the sun gear shaft 54 and the casing 41 constitutes the foot torque detectionmechanism together with the potentiometer 72 for detecting a sway angle of the detection arm 71.

An output signal of the potentiometer 72 showing a magnitude of foot torque is used as a function for controlling the output of the motor 31.

An adjusting stopper 76 is screwed in a threaded hole formed in the casing 41. This adjusting stopper 76 adjusts the initial position of the detection arm 71 to give an initial tension to the compression spring 73.

A rotational speed detection sensor 74 attached to the casing 41 is a proximity sensor for detecting a tooth of a gear 61a provided on the output shaft 61. The rotational speed detection sensor 74 measures an output shaft rotational speed of the drive unit 10 by replacing it with the number of detected teeth of the gear 61a in a period of unit time. The rotational speed detection sensor 74 may be mounted in an appropriate location where the output shaft rotational speed of the drive unit or the running speed of the bicycle can be measured.

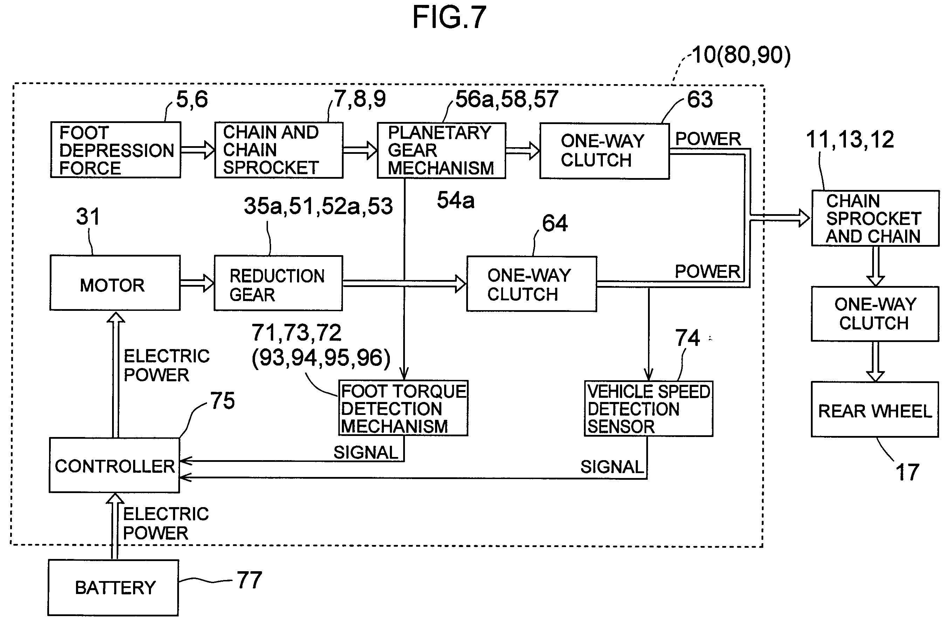

Next, the operation of the bicycle 1 equipped with the assist drive unit 10 will be described with reference to FIG. 7 showing a power transmission system and a control system of the bicycle 1.

When the crankshaft 6 is rotated with human power via pedals 16 and the pedal crank 5, a foot torque is transmitted to an internal gear shaft 56 via the chain sprocket 7, the chain 8, and the chain sprocket 9.

Thereby, the internal gear 56a of the planetary gear mechanism is rotated, so that the planetary gear 58 revolves around the sun gear 54a on the fixed side. As a result, the planetary gear carrier 57 rotates.

The rotation of the carrier 57 is transmitted to the master chain sprocket 11 via the one-way clutch 63, and further rotatively drives the rear wheel 17 through the chain 13, the slave chain sprocket 12, and a one-way clutch (not shown) provided on a rear wheel hub. when the master chain sprocket 11 is turned in the bicycle advancing direction in the state in which the crankshaft 6 stops, the master chain sprocket 11 runs idle without the engagement of the one-way clutch 63.

Although a torque proportional to a foot torque is transmitted to the sun gear shaft 54, an initial pressure has been given to the compression spring 73 of the foot torque detection mechanismas described above. Therefore, when the foot torque reaches a predetermined value preset based on the initial pressure, the potentiometer 72 of the foot torque detection mechanism sends an electrical signal proportional to the foot torque to a controller 75.

The controller 75 calculates a motor output torque for assist corresponding to the foot torque based on the foot torque and a predetermined assist ratio (for example, 1). An electric power control circuit, not shown, incorporated in the controller 75 controls electric power fed from the battery and supplies it to the motor 31.

After the rotational speed of the motor 31 is reduced to a predetermined value by the double reduction gear mechanism connected directly to the output shaft 35 of the motor 31, the rotation of the motor 31 is transmitted to the master chain sprocket 11 via the one-way clutch 64. Thus, an assist torque output from a drive mechanism on the side of the motor 31 is added to the foot torque.

In the state in which the bicycle 1 is operated by a foot depression force only, the transmission of foot depression force to the motor side is shut off by the operation of the one-way clutch 64, so that the motor 31 does not become a load in foot depressing operation.

In the state in which the bicycle 1 is operated while being subjected to an assist torque caused by the motor 31, when the speed of the bicycle 1 reaches a preset value, the motor 31 is stopped by the controller 75. The controller 75 judges overspeed of the bicycle 1 based on the output of the speed detection sensor 74.

In the electric power assist bicycle 1 in accordance with the above-described first embodiment, the drive unit 10 is installed to the frame 2 and the bracket lug 4 of the bicycle body 1A by using the attachment member 14 and the support elements 41c and 44a. Also, a foot depression force is transmitted to the drive unit via the chain 8, and an assist driving force is adjusted in the drive unit 10 and thereafter is transmitted to the rear wheel 17 via the chain 13.

Therefore, according to this electric power assist bicycle 1, the drive unit 10 can be installed later on the bicycle body 1A without modifying the bicycle body 1A of ordinary specification and without replacing basic parts of the bicycle body 1A.

Also, many standard parts for the ordinary bicycle can be used as functional parts used for the power transmission of the drive unit 10, so that reduced cost, improved reliability, and lightweight can be achieved.

### (Second embodiment)

A second embodiment differs from the first embodiment in construction in which the drive unit is installed on the bicycle body 1A.

In the first embodiment, in order to install the drive unit 10 on the bicycle body 1A, one location at the upper part of the drive unit 10 is supported on the oblique frame 2 via the support pin 15 and the attachment member 14. Also, the tip ends of the paired fork-shaped support elements 41c and 44a provided on the drive unit 10 are brought into contact with the outer peripheral surface of the bracket lug 4 of the bicycle body 1A.

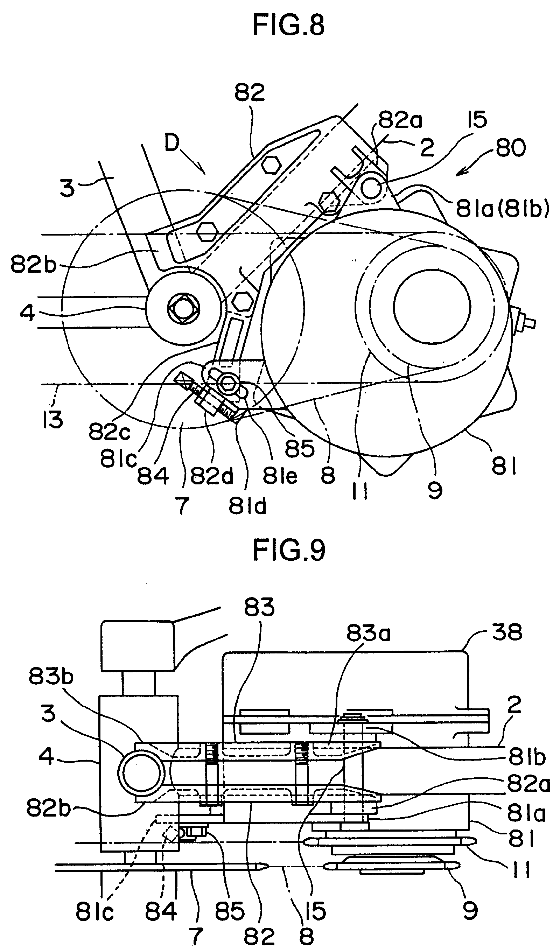

Contrarily, in the second embodiment, as shown in FIG. 8, a unit attachment member 82 is fixed to the oblique frame 2 and the saddle frame 3 of the bicycle body 1A, a drive unit 80 is installed on the attachment member 82 in a pin joint form so as to be swayable. Also, a take-up mechanism is added to adjust the tension of the foot-driven chain.

The following is a detailed description of the second embodiment. The second embodiment uses the same drive mechanism between the motor and the chain sprocket in the drive unit, foottorquedetectionmechanism, and speed detection sensor as those in the first embodiment, so that the explanation of these elements is omitted in the description below.

FIG. 8 is a side view showing a state in which the electric power assist drive unit 80 is installed on the bicycle body 1A, and FIG. 9 is a view taken in the direction of the arrow D of FIG. 8.

In these figures, the drive unit 80 is installed on the bicycle body 1A by using the attachment member 82 and an attachment member 83 substantially symmetrical with the attachment member 82. The attachment members 82 and 83 are disposed so as to be opposed to each other in such a manner that they hold the oblique frame 2 and the saddle frame 3 that are integral with the bracket lug 4, and are detachably fixed to the frames 2 and 3 by the fastening force of a plurality of bolts interposed between the attachment members 82 and 83. The attachment members 82 and 83 press the frames 2 and 3 by means of contact portions 82a and 83a thereof.

At the upper part of a casing 81 for the drive unit 80, a pair of protrusions 81a and 81b are formed. End portions of the attachment members 82 and 83, which are distant from the bracket lug 4, are formed with protrusions 82a and 83a, respectively.

The drive unit 80 is rotatably supported on the attachment members 82 and 83 by inserting a pin 15 in pin holes formed in the protrusions 81a, 81b, 82a and 83a.

An end portion on the bracket lug side of the attachment member 82 is formed with an arm 82c projecting downward, and a protrusion 82d in which an adjusting screw 84 is installed is provided at the tip end of the arm 82c. On the other hand, a protrusion 81c projectingly provided at the slant lower part of the casing 81 is provided with a touch plate 81d, and the tip end of the adjusting screw 84 is in contact with the touch plate 81d. Also, the protrusion 81c is provided with an elongated hole 81e along a circumference with the pin 15 being the center, and a bolt 85 inserted in the elongated hole 81e is screwed in a threaded hole formed in the tip end portion of the arm 82c.

When the adjusting screw 84 is turned in the state in which the bolt 85 is loosened, the projection length of the adjusting screw 84 from the protrusion 82d changes, so that the drive unit 80 rotatively moves through a small angle with the pin 15 being the center. By this rotational movement of the casing 81, the horizontal position of the drive unit 80 is adjusted, with the result that the tension of the chain 8 transmitting a foot depression force is adjusted.

The adjusting screw 84 can be fixed to the protrusion 82d by a nut tightening operation. Also, after the position adjustment of the drive unit 80 is finished, the bolt 85 is tightened to keep the adjusted position of the drive unit 80.

Thus, the electric power assist bicycle in accordance with this embodiment has a take-up function for adjusting the tension of the chain 8.

In the electric power assist bicycle in accordance with the second embodiment, the drive unit 80 is installed to the frame 2 and the saddle frame 3 of the bicycle body 1A by using the attachment members 82 and 83. Also, a foot depression force is transmitted to the drive unit 80 via the chain 8, and is transmitted to the rear wheel 17 via the chain 13 after an assist driving force is adjusted in drive unit 80.

Therefore, according to this electric power assist bicycle, the same effect as that of the first embodiment can be achieved. Specifically, the drive unit 80 can be installed later on the bicycle body 1A without modifying the bicycle body 1A of ordinary specification and without replacing basic parts of the bicycle body 1A. Also, many standard parts for the ordinary bicycle can be used as functional parts used for the power transmission of the drive unit 80, so that reduced cost, improved reliability, and lightweight can be achieved.

### (Third embodiment)

A third embodiment differs from the above-described first and second embodiments in construction in which the drive unit is installed on the bicycle body and configuration of the mechanism for detecting and taking out a foot torque.

Specifically, the third embodiment is common to the first embodiment in terms of the fact that the drive unit is supported by the pin in one location of the oblique frame 2. However, the third embodiment differs from the first and second embodiments in configuration (take-up mechanism) in which the horizontal position of the drive unit is adjusted by the paired support elements attached to the bracket lug 4.

Also, the third embodiment differs from the first and second embodiments in that there is provided a mechanism for detecting and taking out a foot torque, which is configured so that the base of an arm is attached to the sun gear shaft capable of taking out a foot torque, and a gear rack along a circumference with the sum gear shaft being the center is provided at the tip end of the arm, by which a sway of the arm due to a foot torque is transmitted to a potentiometer via the rack and a pinion meshing with the rack. The sun gear shaft is subjected to a spring load proportional to the angle of rotation via the arm.

The following is a detailed description of the third embodiment. The third embodiment uses the same drive mechanism between the motor and the chain sprocket in the drive unit and speed detection sensor as those in the first embodiment, so that the explanation of these elements is omitted in the description below.

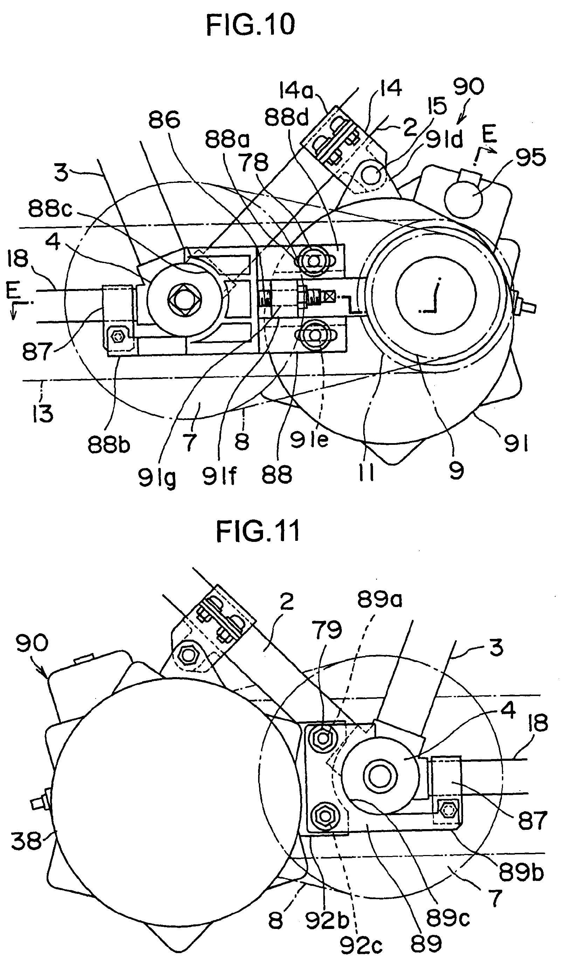

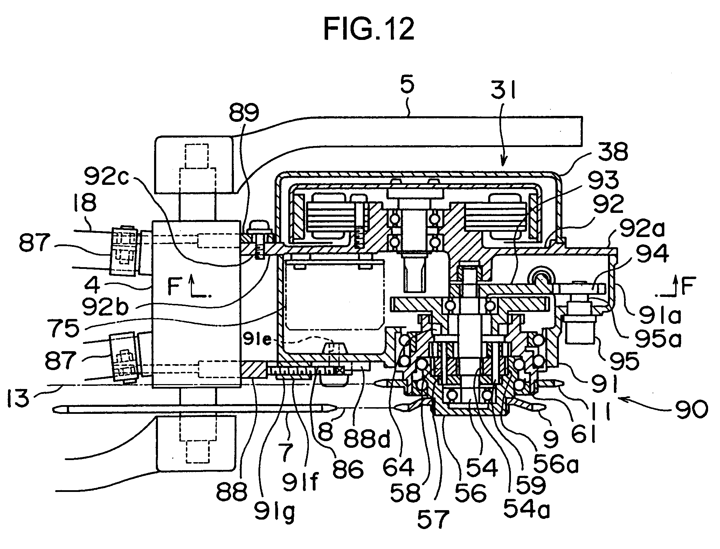

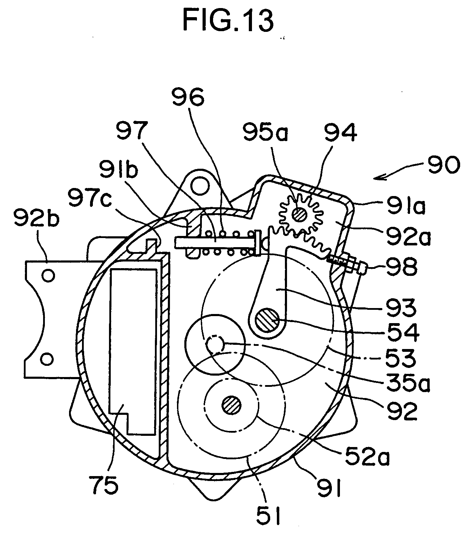

FIG. 10 is a side view showing a state in which an electric power assist drive unit 90 is installed on the bicycle body 1A, FIG. 11 is a back view of the drive unit shown in FIG. 10, FIG. 12 is a sectional view taken along the line E-E of FIG. 10, and FIG. 13 is a sectional view taken along the line F-F of FIG. 12.

In this embodiment, support elements 88 and 89 are provided at right-hand and left-hand sides of the bicycle body 1A, respectively, to support the drive unit 90 and to adjust the horizontal position thereof.

A casing 91 for the drive unit 90 is provided with a projecting chamber 91a (see FIG. 12) for housing an upper protrusion 91d having a mounting hole and a pinion 94 of the foot torque detection mechanism. Also, in the casing 91, there are provided a compression spring 96 (see FIG. 13), a spring support shaft 97 inserted in the compression spring 96, an inside protrusion 91b for slidably supporting the support shaft 97, and a stopper 91c for regulating the movement position of the support shaft 97.

On the outer side surface of the casing 91, there are provided internally threaded holes 91e (see FIG. 10) for installing the support element 88 and a guide piece 91f for guiding the support element 88 in the horizontal direction. The guide piece 91f is formed with an internally threaded hole 91g along the horizontal direction, and an adjusting screw 86 is screwed in the internally threaded hole 91g.

An inner wall 92 of the drive unit 90 shown in FIG. 12 has about the same shape as that of the inner wall 44 (see FIG. 4) in the first embodiment. However, this inner wall 92 differs from the inner wall 44 in the first embodiment in that a protrusion 92a, which is a formation element of the projecting chamber 91a of the casing 91, is formed at the upper part and that an extending wall 92b (see FIG. 11) for attaching the support element 89 in the transverse direction is formed.

The extending wall 92b is provided with internally threaded holes 92c for attaching the support element 89.

As shown in FIG. 10, one end portion of the support element 88 is formed with an edge 88c with a semicircular concave shape having the same diameter as that of the bracket lug 4. Also, the other end thereof is formed with a pair of arms 88d, which extend horizontally in a fork form and are guided horizontally by the guide piece 91f provided on the casing 91.

Each of the arms 88d has an elongated hole 88a. Also, the support element 88 extends rearward under the edge 88c with a semicircular concave shape, and an end portion 88b of the extension thereof is formed with a mounting hole.

The support element 89 has an edge 89c with a semicircular concave shape having the same diameter as that of the bracket lug 4 and a pair of elongated holes 89a. Also, the support element 89 extends backward under the edge 89c, and an end portion 89b of the extension thereof is formed with a mounting hole.

On the oblique pipe frame 2 integral with the bracket lug 4, the attachment member 14 is fastened by using the support plate 14a. The drive unit 90 is pivotally supported by inserting the pin 15 in the hole formed in the attachment member 14 and the mounting hole provided in the upper protrusion 91d of the casing 91.

For the support elements 88 and 89, the edges 88c and 89c with a semicircular concave shape are engaged with the front peripheral surface and the rear peripheral surface of the bracket lug 4, and the extension end portions 88b and 89b are fastened to attachment plates 87 fixed to rear wheel support frames 18 extending rearward from the bracket lug 4 with bolts.

On the other hand, the support element 88 is fastened to the casing 91 by screwing bolts inserted in the elongated holes 88a in the internally threaded holes 91e in the casing 91. Also, the support element 89 is fastened to the extending wall 92b by screwing bolts inserted in the elongated holes 89a in the internally threaded holes 92c formed in the extending wall 92b of the inner wall 92.

The degree of tension of the chain 8 for transmitting a foot depression force can be adjusted by performing an operation for loosening the bolts mounted in the elongated holes 88a and 89a in the support elements 88 and 89 and an operation for turning the adjusting screw 86byunlockingtheadjustingscrew86. Specifically, when the adjusting screw 86 is turned, the casing 91 is rotatively displaced around the pin 15 together with the chain sprocket 9, so that the tension of the chain 8 can be adjusted. Thus, the support elements 88 and 89 have a take-up function for adjusting the tension of the chain 8.

After the adjustment of tension of the chain 8 is finished, the adjusting screw 86 is lockedwith a locknut, and then the support elements 88 and 89 are fixed with the bolts.

Next, the foot torque detection mechanism will be described with reference to FIGS. 12 and 13.

The foot torque detection mechanism for the drive unit 90, the base portion of which is fixed to the sun gear shaft 54, includes a rack arm 93 formed with a fan-shaped (arcuate) rack 93b at the outer peripheral end thereof, a potentiometer 95 in which the pinion 94 meshing with the rack 93b is fixed to a rotating shaft 95a thereof, the support shaft 97 which comes into contact with the rack arm 93 to convert a rotational displacement of the arm 93 into a linear displacement, the compression spring 96 for urging the support shaft 97 toward the rack arm 93, an adjusting stopper 98 for regulating the initial position of the rack arm 93, and the adjusting stopper 91c for regulating the displacement limit position of the support shaft 97.

A foot torque is transmitted from the sun gear shaft 54 to the rack arm 93, with the result that the rack arm 93 turns against the spring 96. Accordingly, the rack arm 93 turns the potentiometer 95 via the pinion 94.

An output signal of the potentiometer 95 is taken in the controller 75 shown in FIG. 7 as a signal showing the foot torque, and is used as a function for controlling the output of the motor 31.

Specifically, the controller 75 implements calculation for multiplying the foot torque detected by the potentiometer 95 by a predetermined assist ratio (for example, 1) to set an assist torque, and controls the output of the motor 31 so that this assist torque can be obtained.

When a foot torque such that the assist torque reaches the allowable upper limit value is applied, the support shaft 97 comes into contact with the stopper 91c. Therefore, a further displacement of the rack arm 93 is inhibited, and the rotation of the potentiometer 95 is also stopped.

On the other hand, the initial position of the rack arm 93 is set by the adjusting stopper 98 so as to give a predetermined compressive force to the compression spring 96. Therefore, during the time when a foot torque is low, the potentiometer 95 does not turn, so that an assist torque is also not developed by the motor 31. When the foot torque increases to a value corresponding to the initial compressive force of the spring 96, the potentiometer 95 turns, so that an assist torque is developed by the motor 31.

Thus, according to the above-described foot torque detection mechanism, the upper limit and developing timing of an electric power assist torque can be adjusted mechanically.

The operation of the drive unit 90 in accordance with the third embodiment is basically the same as the operation of the drive unit 10 in the first embodiment except for the operation of the foot torque detection mechanism. Therefore, the block diagram showing the power transmission system and the control system of the bicycle 1 in which the drive unit 90 is used can also be expressed as shown in FIG. 7. However, since the elements of the foot torque detection mechanism differ from those of the foot torque detection mechanism for the drive unit 10, in FIG. 7, the elements of the foot torque detection mechanism for the drive unit 90 is indicated in parentheses.

The electric power assist bicycle in accordance with the third embodiment is constructed so that the drive unit 90 is attached to the bicycle body by using the attachment member 14 and the support elements 88 and 89. Also, it is constructed so that a foot depression force is transmitted to the drive unit 90 via the chain 8, and an assist driving force is transmitted to the rear wheel 17 via the chain 13 after being adjusted in the drive unit 90.

Therefore, this electric power assist bicycle achieves the same effects as those of the first and second embodiments. Specifically, the drive unit 90 can be installed later on the bicycle body without modifying the bicycle body of ordinary specification and without replacing basic parts of the bicycle body. Also, many standard parts for the ordinary bicycle can be used as functional parts used for the power transmission of the drive unit 90, so that reduced cost, improved reliability, and lightweight can be achieved.

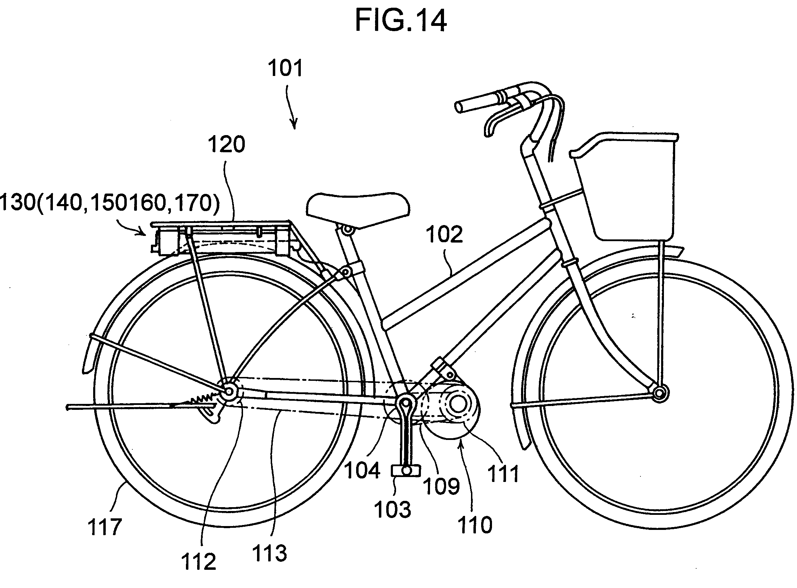

Next, an electric power assist bicycle mounted with a battery unit in accordance with another mode of the present invention will be described in detail with reference to embodiments shown in the accompanying drawings. FIG. 14 is a general side view of a bicycle to which an electric power assist drive unit is installed.

In FIG. 14, reference numeral 101 denotes an electric power assist bicycle (equipped with a drive unit), 110 denotes an assist drive unit, and 120 denotes a rear rack. The drive unit 110 is installed in the front position of a bearing 104 supporting a shaft of the pedals 103. A foot driving force is transmitted to the assist drive unit 110 via a chain 109. In the assist drive unit 110, an assist driving force is controlled by a controller, not shown, and is output by being added to the foot driving force. This output is transmitted to a slave chain sprocket 112 through a master chain sprocket 111 and a chain 113, and serves as power for rotating a rear wheel 117 of the bicycle 101. Also, on the lower face of the rear rack 120, there is installed a battery unit 130 (140, 150, 160, 170) incorporating a plurality of chargeable batteries 133 for supplying power to rotate the rear wheel 117 of the bicycle 101. The outside dimensions of the battery unit 130 (140, 150, 160, 170) are made smaller than the dimensions of the rear rack 120.

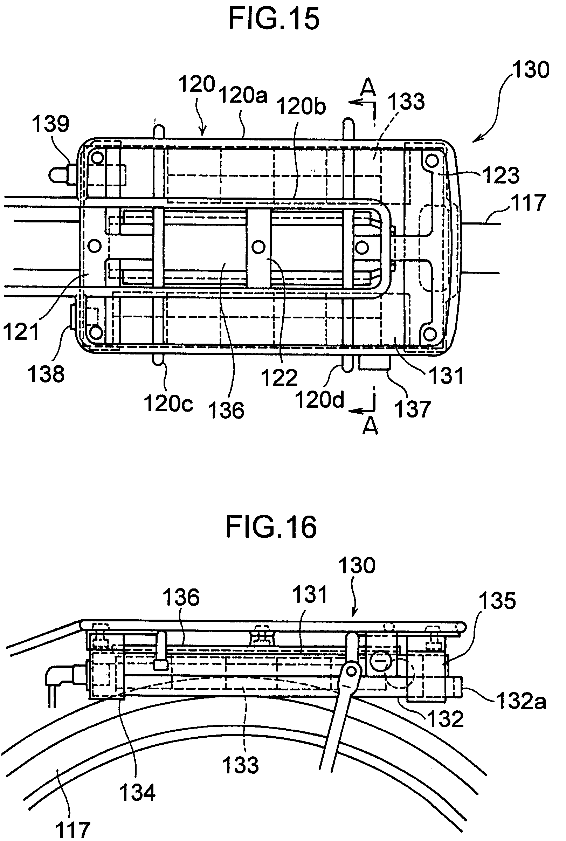

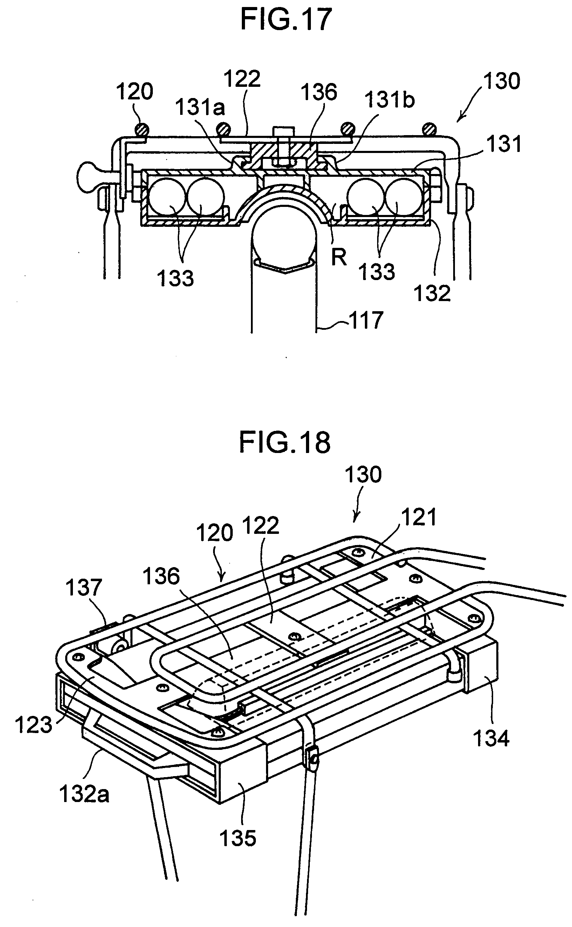

A first embodiment (embodiment of claims 11 and 12) of another mode of the present invention will be described with reference to the accompanying drawings. FIG. 15 is a plan view showing a state in which the battery unit 130 is attached to the rear rack 120, FIG. 16 is a side view of the battery unit 130 shown in FIG. 15, FIG. 17 is a sectional view taken along the line A-A of FIG. 15, and FIG. 18 is a perspective view of the rear rack 120 and the battery unit 130 shown in FIG. 15.

In these figures, a battery case of the battery unit 130, having two series of rectangular parallelepipedic battery storage boxes which are disposed symmetrically in the transverse direction with a gap being established, is constructed by combining two cases, an upper battery case 131 and a lower battery case 132. Specifically, a battery storage chamber R of the battery case is provided so as to be divided into the right and left toward the advance direction of the bicycle 101. In the battery storage chamber R, single-type chargeable dry batteries 133 are arranged in two rows transversely with the axis thereof coinciding with the lengthwise direction of the case, and only one battery is placed in the direction perpendicular to the lengthwise direction. In FIG. 15, the left-hand side battery storage chamber R toward the advance direction of the bicycle 101 stores eleven batteries, and the right-hand side chamber stores nine batteries. In an empty space on the right-hand side, internal wiring, terminals for the wiring, and a terminal board for connecting wires from the outside are incorporated.

At the front and rear ends of the rear rack 120, there are installed a front battery case receiving frame 134 for supporting the upper and lower battery cases 131 and 132 on the front side and a rear battery case receiving frame 135 for supporting the upper and lower battery cases 131 and 132 on the rear side. These front and rear battery case receiving frames 134 and 135 are fixed with screws to attachment plates 121 and 123 welded integrally to steel bars 120a, 120b, 120c and 120d constituting the rear rack 120, respectively. Also, under the rear rack 120 located between the front and rear battery case receiving frames 134 and 135 of the battery unit, there is provided a slide rail 136 which supports the upper and lower battery cases 131 and 132 on the upper side so that the battery cases are movable in the longitudinal direction. The slide rail 136 is fixed with screws to the attachment plates 122 and 123 welded integrally to the steel bar 120b. The slide rail 136 engages with guide grooves 131a and 131b formed in the upper battery case 131 so that the upper and lower battery cases 131 and 132 can slide in the lengthwise direction (longitudinal direction). Therefore, the upper and lower battery cases 131 and 132 can be pulled out and pushed in horizontally in the longitudinal direction of the bicycle 101 by using a handle 132a attached to the battery case.

On the other hand, at the side of the rear rack 120, there is provided a lock key 137 that is engaged with a longitudinal groove, not shown, formed in the upper battery case 131 to fix the upper and lower battery cases 131 and 132 to the rear rack 120 and at the same time to prevent theft. A body of the lock key 137 is fixedly welded to the steel bar 120a of the rack. On the upper and lower battery cases 131 and 132 are installed both of a charging connector 138 in which a direct current terminal of an external charger is inserted and a feeding connector 139 in which a terminal of wire for supplying current to the electric power assist drive unit 110 of the bicycle 101 is inserted.

In the electric power assist bicycle 101 of the first embodiment of the present invention, even if luggage is placed on the rear rack 120, the load does not act on the battery unit 130. Also, since the outside dimensions of the battery unit 130 are made smaller than the outside dimensions of the rear rack 120, the battery unit 130 is protected by the rear rack 120.

In the battery unit 130 of this embodiment, the weight of the twenty batteries 133 amounts to about 4 kg. However, the weight is distributed to the front battery case receiving frame 134, the rear battery case receiving frame 135, and the slide rail 136, so that the mounting structure has a sufficient strength. Moreover, since the slide rail 136 for attaching and detaching the battery cases is provided, the upper and lower battery cases 131 and 132 can be attached and detached easily and safely.

Further, in the battery unit 130 of this embodiment, since the single-type batteries 133 are arranged horizontally, the thickness of the battery unit is decreased, so that the appearance thereof is improved. Also, the height of the rear rack 120 is kept as low as the rack height of the ordinary bicycle, which results in easy luggage loading and unloading operation to and from the rear rack 120, improved stability during running, and improved stability during stopping using a stand.

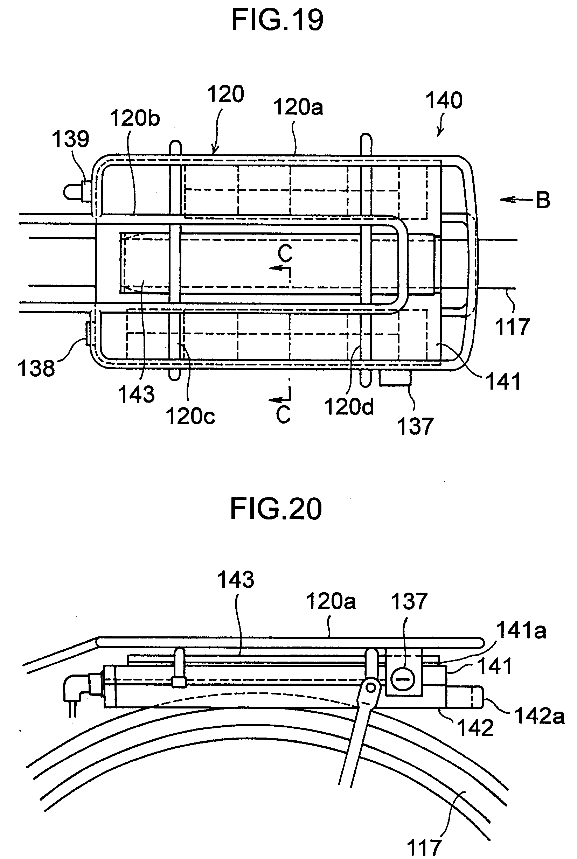

FIGS. 19 to 21 show an electric power assist bicycle in accordance with a second embodiment of another mode of the present invention.

The second embodiment of the present invention differs from the first embodiment in that the battery case receiving frames provided at the front and rear parts under the rear rack are omitted, and the battery case is supported only by the steel-plate slide rail fixedly welded to the rack so that the position of the battery case is fixed (embodiment of claim 13). The following is a description of the second embodiment made with reference to the figures.

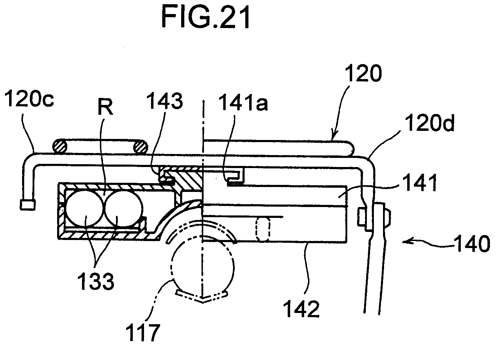

FIG. 19 is a plan view showing a state in which a battery unit 140 is attached to the rear rack 120, FIG. 20 is a side view of the rear rack 120 and the battery unit 140 shown in FIG. 19, and FIG. 21 is a sectional view taken in the direction of the arrow B and along the line C-C of FIG. 19.

In the figures, the battery case of the battery unit 140 is constructed by combining two cases, an upper battery case 141 and a lower battery case 142, as in the first embodiment. The arrangement of the batteries 133 in the upper and lower battery cases 141 and 142 is the same as that in the first embodiment. Specifically, in the battery storage chamber R of the battery cases, the single-type chargeable dry batteries 133 are arranged in two rows transversely with the axis thereof coinciding with the lengthwise direction of the case, and only one battery is placed in the direction perpendicular to the lengthwise direction.

Also, a slide rail 143 supporting the upper and lower battery cases 141 and 142 on the upper side is welded integrally to the steel bars 120c and 120d. Moreover, the slide rail 143 engages with guide grooves 141a formed in the protruding portion of the upper battery case 141 so that the upper and lower battery cases 141 and 142 can slide in the lengthwise direction. Therefore, the upper and lower battery cases 141 and 142 can be pulled out and pushed in horizontally in the longitudinal direction of the bicycle 101 by using a handle 142a attached to the battery case.

As in the first embodiment, the lock key 137 is provided so as to be engaged with a longitudinal groove, not shown, formed in the upper battery case 141 to fix the upper and lower battery cases 141 and 142 to the rear rack 120 and at the same time to prevent theft. Also, both of the charging connector 138 and the feeding connector 139 are installed on the front end faces of the upper and lower battery cases 141 and 142.

In the electric power assist bicycle 101 in accordance with the second embodiment of the present invention, as in the first embodiment, even if luggage is placed on the rear rack 120, the load does not act on the battery unit 140. Also, since the outside dimensions of the battery unit 140 are made smaller than the outside dimensions of the rear rack 120, the battery unit 140 is protected by the rear rack 120.

Also, in the battery unit 140 of this embodiment, the upper and lower battery cases 141 and 142 containing the batteries 133 have a weight of about 4 kg. However, the weight is supported by the long steel-plate slide rail 143 welded integrally to the steel bars 120c and 120d constituting the rear rack 120, so that the mounting structure has a sufficient strength. Moreover, the upper and lower battery cases 141 and 142 can be attached to and detached from the slide rail 143 easily and safely.

Further, in the battery unit 140 of this embodiment, as in the battery unit 130 of the first embodiment, the thickness of the battery unit is decreased, so that the appearance thereof is improved. Also, the height of the rear rack 120 is kept low, which results in easy luggage loading and unloading operation to and from the rear rack 120. In addition, the construction is simple, and the number of parts is small, so that a low cost can be achieved.

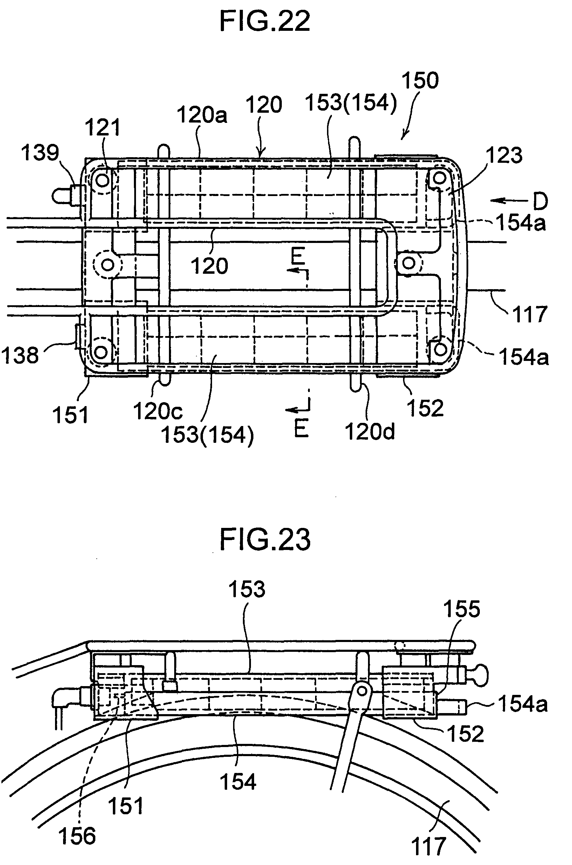

FIGS. 22 to 24 show an electric power assist bicycle in accordance with a third embodiment of another mode of the present invention. A battery unit 150 of this embodiment differs from the battery unit 130 in the first embodiment in that two long and narrow battery cases, each of which contains ten batteries 133, are inserted in and fixed to a battery case receiving frames provided at the front and rear parts of the battery unit, and the slide rail is omitted (embodiment of claim 14).

The following is a description of the third embodiment made with reference to the figures.

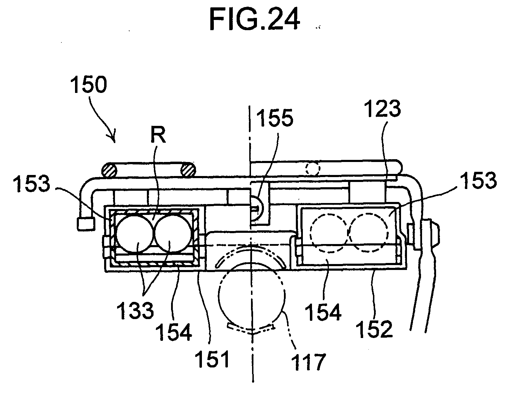

FIG. 22 is a plan view showing a state in which a battery unit 150 is attached to the rear rack 120, FIG. 23 is a side view of the rear rack 120 and the battery unit 150 shown in FIG. 22, and FIG. 24 is a sectional view taken in the direction of the arrow D and along the line E-E of FIG. 23.

In the figures, at the front and rear ends under the rear rack 120, there are installed a front battery case receiving frame 151 and a rear battery case receiving frame 152 for supporting upper and lower batterycases 153 and 154 at the right and left with a gap being established. The battery case of the battery unit 150 is constructed by combining two cases, the upper battery case 153 and the lower battery case 154. The paired upper and lower battery cases 153 and 154 are separately inserted in separate frame holes formed in the front and rear battery case receiving frames 151 and 152 so as to be divided into the right and left.

The paired upper and lower battery cases 153 and 154 are provided, at the rear end, with a handle 154a capable of pulling out and pushing in the battery cases in the longitudinal direction of the bicycle 101, and are provided, at the front end, with a power distributing connector 156 for connecting to wiring in the front battery case receiving frame 151.

In a battery storage chamber R of the battery cases 153 and 154, ten single-type chargeable dry batteries 133 are arranged in two rows transversely with the axis thereof coinciding with the lengthwise direction of the case. The front battery case receiving frame 151 incorporates internal wiring, terminals for the wiring, and a terminal board for connecting wires from the outside.

The front and rear battery case receiving frames 151 and 152 are fixed with screws to the attachment plates 121 and 123 welded integrally to the steel bars 120a, 120b, 120c and 120d constituting the rear rack 120, respectively.

On the other hand, a lock key 155 is provided so as to be engaged with a longitudinal groove, not shown, formed in the paired battery cases 153 and 154, as in the first and second embodiments, to fix the upper and lower battery cases 153 and 154 to the rear rack 120 and at the same time to prevent theft. A body of the lock key 155 is fixedly welded to the steel bar 120a of the rear rack 120. On the front battery case receiving frame 151 are installed both of the charging connector 138 in which a direct current terminal of an external charger is inserted and the feeding connector 139 in which a terminal of wire for supplying current to the electric power assist drive unit 110 of the bicycle is inserted.

In the electric power assist bicycle 101 in accordance with the third embodiment of the present invention, as in the first and second embodiments, even if luggage is placed on the rear rack 120, the load does not act on the battery unit 150. Also, since the outside dimensions of the battery unit 150 are made smaller than the outside dimensions of the rear rack 120, the battery unit 150 is protected by the rear rack 120.

Also, in the battery unit 150 of this embodiment, the upper and lower battery cases 153 and 154 containing the batteries 133 (ten batteries) have a weight of about 2 kg. However, the weight is supported distributedly by the front and rear battery case receiving frames 151 and 152 fixed with screws to the attachment plates 121 and 123 welded integrally to the steel bars 120a and 120b constituting the rear rack 120, 50 that the mounting structure has a sufficient strength. Moreover, the upper and lower battery cases 153 and 154 can be attached to and detached from the front and rear battery case receiving frames 151 and 152 easily and safely.

Further, in the battery unit 150 of this embodiment, as in the battery unit 130 of the first embodiment, the thickness of the battery unit is decreased, so that the appearance thereof is improved. Also, the height of the rear rack 120 is kept low, which results in easy luggage loading and unloading operation to and from the rear rack 120. In addition, the construction is simple, and therefore a low cost can be achieved.

In the battery unit 150 in accordance with the third embodiment, the same operation and effects as those described above can be achieved even if the battery unit 150 is configured so that a protrusion with side grooves is provided on the top face of each of the battery cases 153, a pair of steel-plate slide rails corresponding to the grooves are welded integrally to the steel bars 120c and 120d of the rear rack 120, the battery cases 153 and 154 are supported by the slide rails, and the rear battery case receiving frame is omitted (embodiment of claim 15).

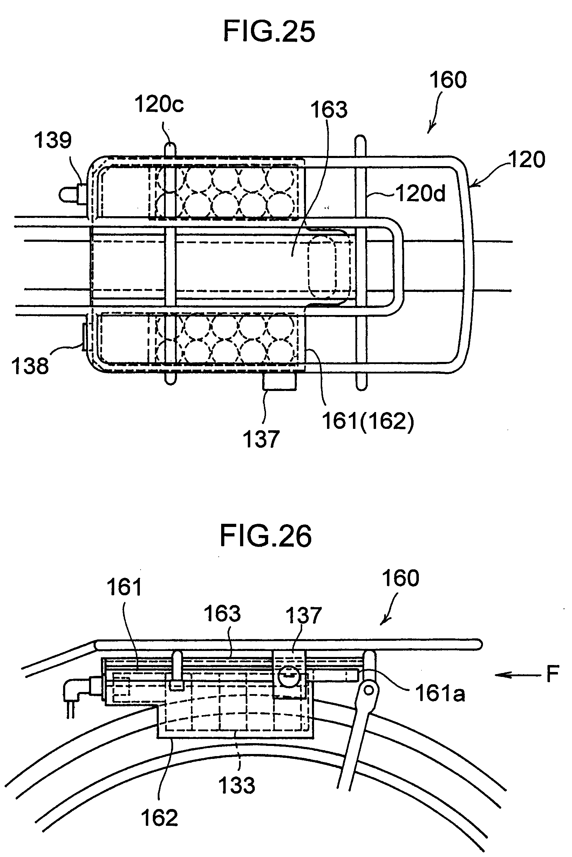

FIGS. 25 to 27 show an electric power assist bicycle in accordance with a fourth embodiment of another mode of the present invention. In the fourth embodiment of the invention, the batteries disposed horizontally in two rows in the battery storage chamber on one side in the above-described embodiments are disposed vertically in two rows. In this case, the thickness of the battery case increases slightly, but a short length and a compact shape are attained. The configuration other than the above is very similar to the configuration of the second embodiment. Specifically, the battery case receiving frames provided at the front and rear parts under the rear rack are omitted, and the battery case is supported only by the steel-plate slide rail fixedly welded to the rear rack so that the position of the battery case is fixed (embodiment of claim 16). The following is a description of the fourth embodiment made with reference to the figures.

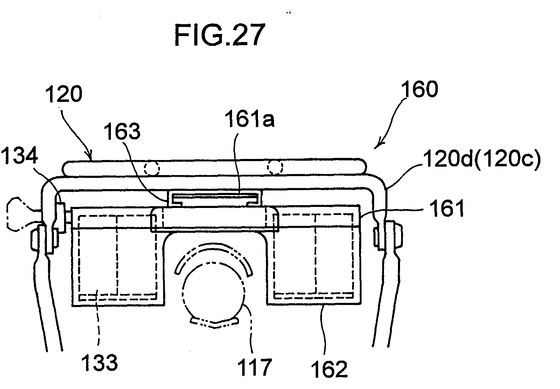

FIG. 25 is a plan view showing a state in which a battery unit 160 is attached to the rear rack 120, FIG. 26 is a side view of the rear rack 120 and the battery unit 160 shown in FIG. 25, and FIG. 27 is a sectional view taken in the direction of the arrow F of FIG. 26.

In the figures, as in the first embodiment, the battery case of the battery unit 160 is constructed by combining two cases, an upper battery case 161 and a lower battery case 162. The battery cases 161 and 162 are divided into the right and left, and battery storage chambers are provided in the battery cases. In each of the storage chambers, the single-type chargeable dry batteries 133 that are erected are arranged in two rows, five in one row.

Also, a steel-plate slide rail 163 for supporting the upper and lower battery cases 161 and 162 on the upper side is welded integrally to the steel bars 120c and 120d. Moreover, the slide rail 163 engages with guide grooves 161a formed in a protruding portion of the upper battery case 161 so that the upper and lower battery cases 161 and 162 can slide in the lengthwise direction. Therefore, the upper and lower battery cases 161 and 162 can be pulled out and pushed in horizontally in the longitudinal direction of the bicycle 101 by using a handle 161a attached to the battery case.

As in the above-described embodiments, the lock key 137 is provided so as to be engaged with a longitudinal groove, not shown, formed in the upper battery case 161 to fix the upper and lower battery cases 161 and 162 to the rear rack 120 and at the same time to prevent theft. Also, both of the charging connector 138 and the feeding connector 139 are installed on the front end faces of the upper and lower battery cases 161 and 162.

In the electric power assist bicycle 101 in accordance with the fourth embodiment of the present invention, as in the above-described embodiments, even if luggage is placed on the rear rack 120, the load does not act on the battery unit 160. Also, since the outside dimensions of the battery unit 160 are made smaller than the outside dimensions of the rear rack 120, the battery unit 160 is protected by the rear rack 120.

Also, in the battery unit 160 of this embodiment, the upper and lower battery cases 161 and 162 containing the batteries 133 have a weight of about 4 kg. However, the weight is supported by the long steel-plate slide rail 163 welded integrally to the steel bars 120c and 120d constituting the rear rack 120, so that the mounting structure has a sufficient strength. Moreover, the upper and lower battery cases 161 and 162 can be attached to and detached from the slide rail 163 easily and safely.

Further, in the battery unit 160 of this embodiment, the thickness is slightly great, but the length is short as compared with the battery units of the first to third embodiments, so that compact appearance is attained. Moreover, the height of the rear rack 120 is kept low, as in the battery units of the first to third embodiments, which results in easy luggage loading and unloading operation to and from the rear rack 120. In addition, the construction is simple, and the number of parts is small, so that a low cost can be achieved.

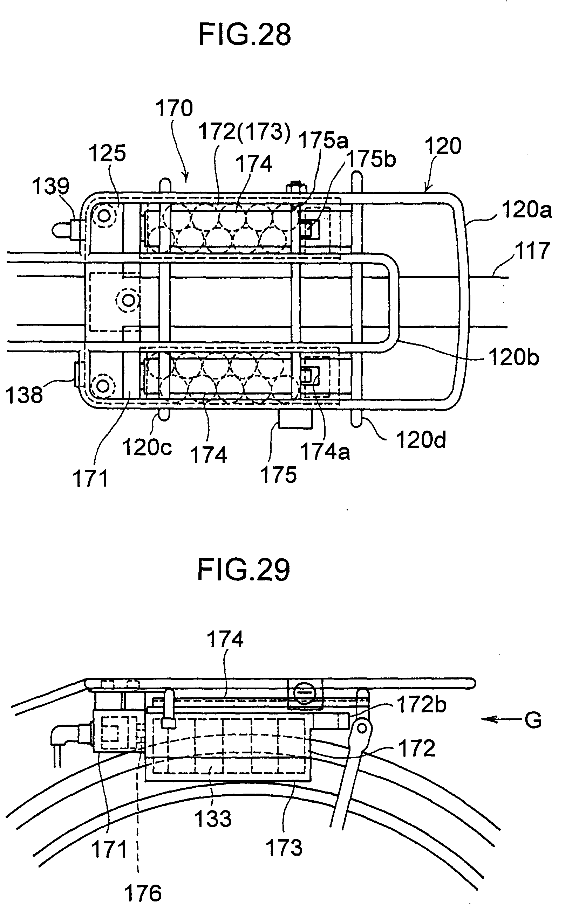

FIGS. 28 to 30 show an electric power assist bicycle in accordance with a fifth embodiment of another mode of the present invention. In the fifth embodiment of the invention, two long and narrow battery cases each containing ten batteries 133 are supported by inherent slide rails fixed on the lower face of the rack, the front end side of the battery case is connected to a power distribution case provided at the front part on the lower face of the rack, and in each battery case, the batteries 133 that are erected are arranged in two rows in a zigzag form, five in one row, in a battery storage chamber in a similar manner as the fourth embodiment so that the thickness of the battery case slightly increases, but a short length and a compact shape are attained (embodiment of claim 17). The following is a description of the fifth embodiment made with reference to the figures.

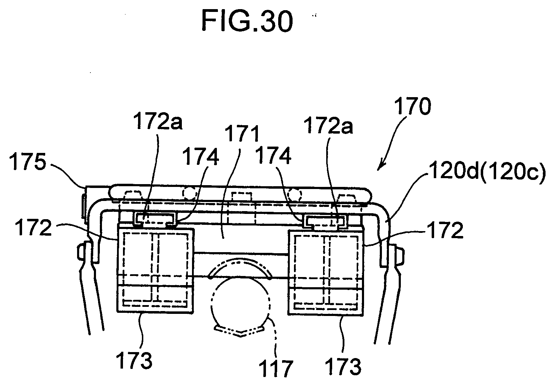

FIG. 28 is a plan view showing a state in which a battery unit 170 is attached to the rear rack 120, FIG. 29 is a side view of the rear rack 120 and the battery unit 170 shown in FIG. 28, and FIG. 30 is a sectional view taken in the direction of the arrow G of FIG. 29.

In the figures, as in the first embodiment, the battery case of the battery unit 170 is constructed by combining two cases, an upper battery case 172 and a lower battery case 173. Moreover, the battery unit 170 is provided with two sets of the battery cases 172 and 173. In the battery storage chamber of the upper and lower battery cases 172 and 173, the single-type chargeable dry batteries 133 that are erected are arranged in two rows in a zigzag form, five in one row. The paired upper and lower battery cases 172 and 173 are provided with a handle 172b capable of pulling and pushing the battery cases out of and into the lower side of the rear rack 120 horizontally in the longitudinal direction of the bicycle 101.

On the top face of each of the upper battery cases 172 is provided a protruding portion 172a with side grooves, and in the positions corresponding to the protruding portions 172, a pair of steel-plate slide rails 174 are welded integrally to the steel bars 120c and 120d of the rear rack 120. Therefore, the upper and lower battery cases 172 and 173 are supported by the slide rails 174.

On the other hand, the power distribution case 171 is fixed with screws to an attachment plate 125 welded integrally to the steel bars 120a and 120c. Also, in the power distribution case 171, there are provided wiring for current received from a power distributing connector 176 of the two battery cases 172 and 173 and a terminal for the connection of the charging connector 138 and the feeding connector 139. The power distributing connector 176 of the upper and lower battery cases 172 and 173 is configured so as to carry current when being inserted in the power distribution case 171 at the same time when the battery cases 172 and 173 are set. Moreover, the charging connector 138 and the feeding connector 139 are installed to the power distribution case 171.

Also, as in the above-described embodiments, the lock key 175 is provided so as to be engaged with a longitudinal groove, not shown, formed in the top face of the upper battery case 172 to fix the upper and lower battery cases 172 and 173 to the rear rack 120 and at the same time to prevent theft. Specifically, when a rotating shaft 175a of the lock key 175 is turned, a latch 175b passes through a square hole 174a formed in the slide rail 174, and presses the rear end of the protruding portion 172a of the upper battery case 172. By withdrawing the key in this state, the latch 175b is locked.

In the electric power assist bicycle 101 in accordance with the fifth embodiment of the present invention, as in the above-described embodiments, even if luggage is placed on the rear rack 120, the load does not act on the battery unit 170. Also, since the outside dimensions of the battery unit 170 are made smaller than the outside dimensions of the rear rack 120, the battery unit 170 is protected by the rear rack 120.

Also, in the battery unit 170 of this embodiment, the upper and lower battery cases 172 and 173 containing the batteries 133 (ten batteries) have a weight of about 2 kg. However, the weight is supported by the long steel-plate slide rail 174 welded integrally to the steel bars 120c and 120d constituting the rear rack 120, so that the mounting structure has a sufficient strength. Moreover, the upper and lower battery cases 172 and 173 can be attached to and detached from the slide rail 174 easily and safely.

Further, in the battery unit 170 of this embodiment, as in the battery unit 160 of the fourth embodiment, the thickness is slightly great, but the length is short, so that compact appearance is attained. Moreover, the height of the rear rack 120 is kept low, as in the battery units of other embodiments, which results in easy luggage loading and unloading operation to and from the rear rack 120. In addition, the construction is simple, and the number of parts is small, so that a low cost can be achieved.

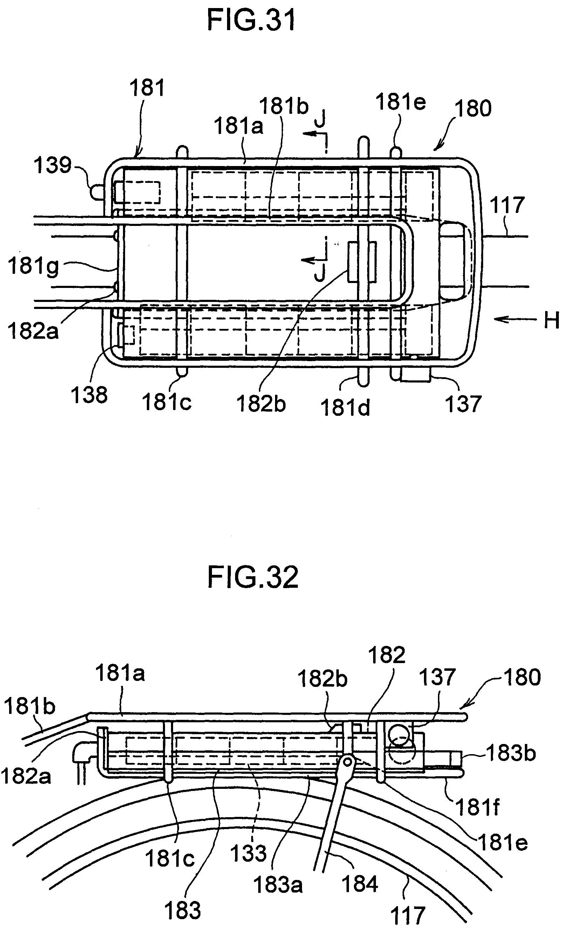

FIGS. 31 to 34 show an electric power assist bicycle in accordance with a sixth embodiment of another mode of the present invention. In the sixth embodiment of the invention, the front and rear battery case receiving frames under the rear rack provided in the first embodiment are omitted, and in place of the steel-plate slide rail fixedly welded to the rear rack in the second embodiment, cross steel bars of the rear rack are extended bendedly to the lower side so as to wrap the battery case, and a guide rail is installed to guide the battery case horizontally in the lengthwise direction and to support it so that the position is fixed (embodiment of claims 18 and 19). The following is a description of the sixth embodiment made with reference to the figures.

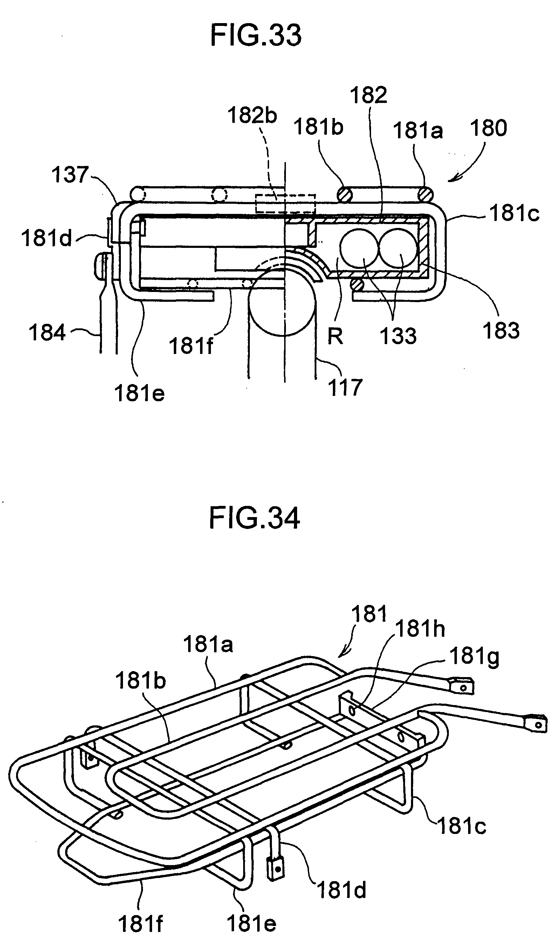

FIG. 31 is a plan view showing a state in which a battery unit 180 is attached to a rear rack 181, FIG. 32 is a side view of the rear rack 181 and the battery unit 180 shown in FIG. 31, FIG. 33 is a sectional view taken in the direction of the arrow H and along the line J-J of FIG. 23, and FIG. 34 is a perspective view showing the construction of the rear rack 181 shown in FIG. 31.

In the figures, as in the battery case of the second embodiment, the battery case of the battery unit 180 is constructed by combining two cases, an upper battery case 182 and a lower battery case 183. In the battery storage chamber R of the battery case, the single-type chargeable dry batteries 133 are arranged in two rows transversely with the axis thereof coinciding with the lengthwise direction of the case, and only one battery in the rear end portion is arranged at right angles.

The rear rack 181 supporting the battery unit 180 has an integral steel bar welded construction in which, as shown in FIG. 34, two cross steel bars 181c and 181e are disposed at an interval andwelded integrally to an outside frame steel bar 181a and an inside frame steel bar 181b welded integrally to the outside frame steel bar 181a, serving as the ordinary rear rack, longitudinal members of the cross steel bars 181c and 181e are extended to the lower side of the rack, the tip end portions thereof are bent to the inside and arranged so as to be opposed to each other, by which a rectangular frame whose lower central portion is open is formed, and a horizontal U-shaped guide rail 181f for supporting the lower face of the battery case is welded to the inside ends of the rectangular frame. Also, a cross steel bar 181d is welded integrally to the outside frame steel bar 181a and the inside frame steel bar 18lb of the rear rack 181 so that the rear rack 181 is supported on the rear shaft of the bicycle 101 via a support member 184.

The guide rail 181f engages with both insides of a pair of parallel protruding portions in the lengthwise direction of the lower battery case 183 to support the battery case, and at the same time is formed so as to enable the sliding of the battery case in the lengthwise direction. Therefore, the battery case can be pulled out and pushed in horizontally in the longitudinal direction of the bicycle 101 by using a handle 183ba attached to the battery case.

On the top face of the upper battery case 182, there is provided a protrusion 182b having a semicircular groove that engages with the cross steel bar 181d of the rack to determine the position of the battery unit 180. Also, onthe end face of the upper battery case 182, a plurality of (two in the figure ) protrusions 182a are provided. These protrusions 182a engage with a plurality of (two in the figure) holes 181h formed in a plate member 181g provided at the end of the guide rail 181f of the rear rack 181, by which the position of the battery unit 180 is determined.

As in the above-described embodiments, the lock key 137 attached by welding to the rear rack 181 is provided so as to be engaged with a longitudinal groove, not shown, formed in the upper battery case 182 to fix the upper and lower battery cases 182 and 183 to the rear rack 181 and at the same time to prevent theft. Also, both of the charging connector 138 and the feeding connector 139 are installed on the front end faces of the upper and lower battery cases 182 and 183.

In the electric power assist bicycle 101 in accordance with the sixth embodiment of the present invention, as in the above-described embodiments, even if luggage is placed on the rear rack 181, the load does not act on the battery unit 180. Also, since the outside dimensions of the battery unit 180 are made smaller than the outside dimensions of the rear rack 181, the battery unit 180 is protected by the rear rack 181.

Also, the battery unit 180 of this embodiment containing the batteries 133 have a weight of about 4 kg. However, the weight is supported by the guide rail 181f welded integrally to the steel bars 181c and 181e constituting the rear rack 181, so that the mounting structure has a sufficient strength. Moreover, the battery unit 180 can be attached to and detached from the guide rail 163 easily, and since the side face of the battery unit 180 is also protected by the steel bars 181c and 181e, greater safety can be provided.

Further, in the battery unit 180 of this embodiment, as in the battery units of other embodiments, the thickness is small, so that the appearance is improved. Moreover, the height of the rear rack 181 is kept low, whichresults in easy luggage loading and unloading operation to and from the rear rack 181. In addition, the construction is simple, and the number of parts is small, so that a low cost can be achieved.

The above is a description of the embodiments of the present invention, and the present invention is not limited to the above-described embodiments. Various changes and modifications can be made without departing from the spirit and scope of the present invention.

## Claims

1. An electric power assist bicycle having a bicycle body with a foot-driven chain sprocket rotated by foot operation and an electric power assist drive unit attached to said bicycle body,
in which said electric power assist drive unit includes an electric motor, a foot depression slave chain sprocket which takes in the power of said foot-driven chain sprocket as foot depression power via a first chain, and a master chain sprocket rotated by power obtained by composition of the taken-in foot depression power and assist power caused by said electric motor,
by which the power of said master chain sprocket is transmitted to a rear wheel of said bicycle body via a second chain.

2. The electric power assist bicycle according to claim 1, wherein said foot depression slave sprocket and saidmaster sprocket are disposed concentrically.

3. The electric power assist bicycle according to claim 1 or 2, wherein said electric power assist drive unit is located on the front side of a bracket lug of said bicycle body, the upper part of a casing of said electric power assist drive unit is attached to said bicycle body, and a support element which is in contact with said bracket lug to support said casing is provided on said casing.

4. The electric power assist bicycle according to claim 1 or 2, wherein the upper part of casing of said electric power assist drive unit is pivotally fixed to an attachment member fixed to said bicycle body, support means for supporting said electric power assist drive unit is interposed between said attachment member and said electric power assist drive unit, and said support means has a take-up function for swayingly displacing said electric power assist drive unit with said pivotally fixing portion being the center to adjust the tension of said second chain.

5. The electric power assist bicycle according to claim 1 or 2, wherein said electric power assist drive unit is located on the front side of bracket lug of said bicycle body, the upper part of casing of said electric power assist drive unit is pivotally fixed to said bicycle body, support means which is in contact with said bracket lug to support said casing is provided on said casing, said support means has a take-up function for swayingly displacing said electric power assist drive unit with said pivotally fixing portion being the center to adjust the tension of said second chain.

6. The electric power assist bicycle according to claim 5, wherein said support means has a connecting portion for fixedly connecting said support means itself to said bicycle body.

7. The electric power assist bicycle according to any one of claims 1 to 6, wherein said electric power assist drive unit comprises:
a speed reducing mechanism, having a hollow speed reducing output shaft, for reducing the rotational speed of said electric motor;
a planetary gear mechanism having a sun gear provided on a sun gear shaft which is concentric with said speed reducing output shaft and is rotatable, an internal gear connected directly to said foot depression slave chain sprocket, and a planetary gear which is supported by a planetary gear carrier to be rotated between said sun gear and said internal gear in a similar manner to a planet;
a first one-way clutch which is interposed between said speed reducing output shaft and the shaft of said master chain sprocket and engageswhen said speed reducing shaft drives said master chain sprocket; and
a second one-way clutch which is interposed between said planetary gear carrier and said master chain sprocket and engages when said planetary gear carrier drives said master chain sprocket, and
has a configuration in which these elements are housed in said casing.

8. The electric power assist bicycle according to claim 7, wherein said casing incorporates foot torque detecting means for detecting a foot torque, and a controller for controlling supply power to said electric motor based on said foot torque.

9. The electric power assist bicycle according to claim 8, wherein said foot torque detecting means comprises a torque detection armwhich sways with the rotation of said sun gear shaft, a spring for applying a force proportional to the sway angle of said torque detection arm to said torque detection arm, and angle detecting means for detecting the sway angle of said torque detection arm as a foot torque.

10. The electric power assist bicycle according to claim 9, wherein said torque detection arm has a fan-shaped rack along a circumference with the rotating shaft thereof being the center, and said angle detecting means has a pinion meshing with said rack and a potentiometer operating in connection with said pinion.

11. An electric power assist bicycle in which an electric power assist drive section is additionally provided in a foot drive section, wherein a chargeable battery unit for supplying electric power to an electric motor comprises a battery case having two series of rectangular parallelepipedic battery storage boxes disposed symmetrically in the transverse direction with a gap being established, single-type chargeable dry batteries disposed horizontally and stored in the storage boxes of said battery case, a feeding connector and a charging connector attached to the front end of said battery case, and front and rear battery case receiving frames which are attached to the front and rear parts under a rear rack to support said battery case, and is configured so as to be mounted flat under said rear rack within an area occupied by said rear rack.

12. The electric power assist bicycle according to claim 11, wherein a slide rail for supporting said battery case so as to be movable in the longitudinal direction is provided between the front and rear battery case receiving frames of said battery unit under said rear rack so that said battery case is made a detachable type capable of being pulled out horizontally, and a lock key is provided on said rear rack to fix the position of said battery case and to prevent theft.

13. The electric power assist bicycle according to claim 12, wherein said slide rail for battery case is constructed of a steel plate integral with said rear rack to support said battery case, and said rear battery case receiving frame is omitted.

14. An electric power assist bicycle in which an electric power assist drive section is additionally provided in a foot drive section, wherein a chargeable battery unit for supplying electric power to an electric motor comprises a pair of rectangular parallelepipedic battery cases, single-type chargeable dry batteries disposed horizontally and stored in said battery cases, a power distributing connector attached to the front end of said battery case, front and rear battery case receiving frames for supporting said battery cases at the right and left with a gap being established, and a feed connector and a charging connector attached to the front side of said front battery case receiving frame, and further a lock key is provided on a rear rack to fix the position of said battery case and to prevent theft.

15. The electric power assist'bicycle according to claim 14, wherein in said battery unit, said battery cases are supported by a pair of steel-plate slide rails corresponding to the battery cases, which are provided in parallel integrally with said rear rack, and said rear battery case receiving frame is omitted.

16. An electric power assist bicycle in which an electric power assist drive section is additionally provided in a foot drive section, wherein a chargeable battery unit for supplying electric power to an electric motor comprises a battery case having two series of rectangular parallelepipedic battery storage boxes disposed symmetrically in the transverse direction with a gap being established, single-type chargeable dry batteries disposed vertically and stored in two rows in the storage boxes of said battery case, a feeding connector and a charging connector attached to the front end of said battery case, a front battery case receiving frame attached to the front end on the lower side of a rear rack to support said battery case, a steel-plate slide rail integral with said rear rack, which is provided to support said battery case so as to be movable longitudinally under said rear rack in the rear of said front battery case receiving frame, and a lock key provided on said rear rack to fix the position of said battery case and to prevent theft, and is configured so that the upper part of a rear wheel is housed in a space between both the battery cases, and said battery case is of a detachable type capable of being pulled out horizontally.

17. An electric power assist bicycle in which an electric power assist drive section is additionally provided in a foot drive section, wherein a chargeable battery unit for supplying electric power to an electric motor comprises a pair of rectangular parallelepipedic battery cases, single-type chargeable dry batteries disposed vertically and stored in said battery cases, a power distributing connector attached to the front end of said battery case, a battery case receiving frame having a connector engaging with the power distributing connector of said battery case, which is attached to the front end on the lower side of a rear rack to support said battery cases at the right and left with a gap being established, a pair of steel-plate slide rails provided integrally with said rear rack horizontally in parallel corresponding to said battery cases, and a feeding connector and a charging connector attached to the front end of said battery case receiving frame, and further a lock key is provided on said rear rack to fix the position of said battery case and to prevent theft.

18. An electric power assist bicycle in which an electric power assist drive section is additionally provided in a foot drive section, wherein a chargeable battery unit for supplying electric power to an electric motor comprises a rear rack in which two cross steel bars are extended to the lower side to form a rectangular frame whose lower central portion is open and a U-shaped guide rail attached horizontally in the bicycle advance direction integrally to the inside end portion of said rectangular frame is provided, a battery case having two series of rectangular parallelepipedic battery storage boxes disposed symmetrically in the transverse direction with a gap being established, single-type chargeable dry batteries disposed'horizontally and stored in the storage boxes of the battery case, a feeding connector and a charging connector attached to the front end of said battery case, and a lock key fixed to said rear rack to fix the position of said battery case and to prevent theft, and is configured so as to be mounted flat under said rear rack within an area occupied by said rear rack.

19. The electric power assist bicycle according to claim 18, wherein a protrusion having a semicircular groove engaging with the cross steel bar of said rear rack is provided on the top face of said battery case so that said battery case is positioned with respect to said rear rack by said protrusion.
